(19) **Europäisches Patentamt**
**European Patent Office**
**Office européen des brevets**

(11) **EP 4 138 346 A1**

(12) **EUROPEAN PATENT APPLICATION**
published in accordance with Art. 153(4) EPC

(43) Date of publication:
**22.02.2023 Bulletin 2023/08**

(21) Application number: **21803258.9**

(22) Date of filing: **24.03.2021**

(51) International Patent Classification (IPC):
**H04L 12/703** (2013.01)　　**H04L 12/721** (2013.01)
**H04L 29/06** (2006.01)

(52) Cooperative Patent Classification (CPC):
**H04L 9/40; H04L 45/06; H04L 45/28**

(86) International application number:
**PCT/CN2021/082831**

(87) International publication number:
**WO 2021/227674 (18.11.2021 Gazette 2021/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.05.2020　CN 202010404456**

(71) Applicant: **Huawei Technologies Co., Ltd.**
**Shenzhen, Guangdong 518129 (CN)**

(72) Inventors:
• **ZHANG, Xudong**
**Shenzhen, Guangdong 518129 (CN)**
• **GUO, Feng**
**Shenzhen, Guangdong 518129 (CN)**
• **ZHANG, Peng**
**Shenzhen, Guangdong 518129 (CN)**
• **XU, Haijun**
**Shenzhen, Guangdong 518129 (CN)**

(74) Representative: **Maiwald GmbH**
**Engineering**
**Elisenhof**
**Elisenstrasse 3**
**80335 München (DE)**

(54) **PROCESSING METHOD FOR PROTOCOL MESSAGE, NETWORK DEVICE, AND COMPUTER STORAGE MEDIUM**

(57) This application provides a protocol packet processing method, a network device, and a computer storage medium. The method includes: a first network device receives a first protocol packet; and the first network device processes the first protocol packet based on a first quantity, the first protocol packet, and a trustworthiness set, where the first quantity includes a quantity of protocol packets stored in the first network device or a quantity of routes stored in the first network device.

A first network device receives a first protocol packet sent by a second network device — S101

When a first quantity is less than a first threshold, the first network device stores the first protocol packet and/or a first route, and stores a first identifier set and a first trustworthiness level in a trustworthiness set in association — S102

The first network device receives a second protocol packet — S103

When the first quantity is greater than or equal to the first threshold, the first network device determines whether the second protocol packet is trustworthy — S104

In response to a result that the second protocol packet is trustworthy, the first network device stores the second protocol packet, or the first network device updates a route table based on the second protocol packet — S105

In response to a result that the second protocol packet is untrustworthy, the first network device discards the second protocol packet — S106

FIG. 2

EP 4 138 346 A1

**Description**

This application claims priority to Chinese Patent Application No. 202010404456.X, filed with the China National Intellectual Property Administration on May 13, 2020 and entitled "PROTOCOL PACKET PROCESSING METHOD, NETWORK DEVICE, AND COMPUTER STORAGE MEDIUM", which is incorporated herein by reference in its entirety.

**TECHNICAL FIELD**

The present invention relates to the field of communication technologies, and in particular, to a protocol packet processing method, a network device, and a computer storage medium.

**BACKGROUND**

A basic function of a network as a new transmission medium is to forward data packets. Network devices in the network may exchange protocol packets to share network-wide routing information, so that data packets can be forwarded in the network. However, when a network scale is ever-expanding or the network device in the network suffers a malicious route attack, a large quantity of attack protocol packets exist in the network. The network device receives and stores these attack protocol packets and attack routes carried in the attack protocol packets, exhausting a memory of the network device. Consequently, faults such as repeated restarts occur on the network device, and normal service running in the network is affected.

In the conventional technology, a problem that a network device is faulty due to attacks of massive protocol packets and massive routes is resolved mainly by limiting a quantity of routes processed based on a route protocol, but the effect is not ideal.

**SUMMARY**

Embodiments of this application disclose a protocol packet processing method, a network device, and a computer storage medium, so that a network device can normally process a protocol packet under attack of massive protocol packets.

According to a first aspect, this application provides a protocol packet processing method, including:

a first network device receives a first protocol packet; and
the first network device processes the first protocol packet based on a first quantity, the first protocol packet, and a trustworthiness set, where the first quantity includes a quantity of protocol packets stored in the first network device or a quantity of routes stored in the first network device.

In some possible designs, the trustworthiness set includes at least one identifier set and at least one trustworthiness level, and the at least one identifier set one-to-one corresponds to the at least one trustworthiness level. Before the first network device receives the first protocol packet, the method further includes: the first network device receives a second protocol packet sent by a second network device, where the at least one identifier set includes a first identifier set, the at least one trustworthiness level includes a first trustworthiness level, the first identifier set corresponds to the first trustworthiness level, the first identifier set includes a first identifier, the first identifier set indicates a feature of a second protocol packet corresponding to the first identifier set and/or a network device that generates the second protocol packet, and the first trustworthiness level indicates a trustworthiness level of the second protocol packet corresponding to the first identifier.

In some possible designs, when the first identifier indicates a route corresponding to the second protocol packet, the first identifier set further includes a second identifier, and the second identifier indicates the network device that generates the second protocol packet.

In some possible designs, when the first identifier indicates a link corresponding to the second protocol packet, the first identifier set further includes a second identifier and a third identifier, the second identifier indicates a type of the second protocol packet, and the third identifier indicates the network device that generates the second protocol packet.

In some possible designs, the first trustworthiness level includes a time point at which the first network device receives the second protocol packet, duration in which the first network device receives the second protocol packet, or a trustworthiness score given by the first network device to the second protocol packet.

It can be learned that the first network device may use a plurality of different manners as a trustworthiness level of the second protocol packet, for example, use the time point at which the first network device receives the second protocol packet as the trustworthiness level of the second protocol packet, use the duration in which the first network device receives the protocol packet as the trustworthiness level of the second protocol packet, or use the trustworthiness score given by the first network device to the second protocol packet as the trustworthiness level of the second protocol packet.

In some possible designs, when the first quantity is greater than or equal to a first threshold, that the first network device processes the first protocol packet based on a first quantity, the first protocol packet, and a trustworthiness set includes: the first network device obtains a second identifier set based on the first protocol packet; the first network device determines, based on the second identifier set and the trustworthiness set, whether the first protocol packet is trustworthy; and the first network device performs different processing on the first protocol packet based on the determining whether the first protocol packet is trustworthy.

It can be learned that when the quantity of protocol packets stored in the first network device is greater than or equal to the first threshold or the quantity of routes stored in the first network device is greater than or equal to the first threshold, the first network device can determine, based on the trustworthiness set and the second identifier set that corresponds to the first protocol packet, whether the first protocol packet is trustworthy, to perform different processing on the first protocol packet instead of directly choosing to discard the first protocol packet.

In some possible designs, that the first network device performs different processing on the first protocol packet based on the determining whether the first protocol packet is trustworthy includes: in response to a result that the first protocol packet is trustworthy, that the first network device processes the first protocol packet includes: the first network device stores the first protocol packet; or the first network device updates a route table based on the first protocol packet; or in response to a result that the first protocol packet is untrustworthy, that the first network device processes the first protocol packet includes: the first network device discards the first protocol packet.

It can be learned that when the first protocol packet is trustworthy, the first network device stores the first protocol packet or updates the route table based on the first protocol packet; or when the first protocol packet is untrustworthy, the first network device discards the first protocol packet. Therefore, when the quantity of protocol packets stored in the first network device is greater than or equal to the first threshold or the quantity of routes stored in the first network device is greater than or equal to the first threshold, the first network device can learn a trustworthy protocol packet and discard an untrustworthy protocol packet. Compared with the conventional technology in which the first protocol packet is directly discarded, the foregoing method can ensure that a trustworthy protocol packet is normally learned under attack of massive protocol packets, to reduce impact on a normal service.

In some possible designs, that the first network device determines, based on the second identifier set and the trustworthiness set, whether the first protocol packet is trustworthy includes: the first network device determines, based on that the trustworthiness set includes the second identifier set, that the first protocol packet is trustworthy; or if the trustworthiness set does not include the second identifier set, the first network device determines, based on a third network device that sends the first protocol packet, that the first protocol packet is trustworthy.

It can be learned that the first network device uses the trustworthiness set. When the trustworthiness set includes the second identifier set corresponding to the first protocol packet, the first network device determines that the first protocol packet is trustworthy. For example, the first protocol packet is a protocol packet generated due to route flapping. In this case, the first network device may relearn the first protocol packet. Alternatively, the first network device determines, based on the third network device that sends (including generating or forwarding) the first protocol packet, whether the first protocol packet is trustworthy. Whether the first protocol packet is trustworthy can be quickly and conveniently determined in the foregoing two manners.

In some possible designs, the trustworthiness set includes a second trustworthiness level, the second identifier set corresponds to the second trustworthiness level, and that the first network device determines, based on that the trustworthiness set includes the second identifier set, that the first protocol packet is trustworthy includes: the first network device determines, based on that the first trustworthiness level is lower than the second trustworthiness level, that the first protocol packet is trustworthy.

It can be learned that the first network device may further determine, based on the second trustworthiness level corresponding to the second identifier set in the trustworthiness set, whether the first protocol packet is trustworthy. A higher second trustworthiness level indicates a more trustworthy first protocol packet.

In some possible designs, before that the first network device determines, based on a third network device, that the first protocol packet is trustworthy, the method further includes: The first network device obtains a configuration, where the configuration indicates that a protocol packet sent by the third network device is trustworthy.

It can be learned that the first network device determines, based on the configuration indicating that the protocol packet sent by the third network device is trustworthy, that the first protocol packet sent by the third network device is trustworthy.

In some possible designs, before that the first network device stores the first protocol packet, the method further includes: The first network device deletes the second protocol packet.

It can be learned that the first network device deletes the second protocol packet whose trustworthiness level is lower than that of the first protocol packet, so that the first network device learns the first protocol packet when a memory does not exceed a limit.

In some possible designs, when the first quantity is less than a first threshold, that the first network device processes the first protocol packet based on a first quantity, the first protocol packet, and a trustworthiness set includes: the first network device obtains a second identifier set and a second trustworthiness level based on the first protocol packet; and the first network device stores the second identifier set and the second trustworthiness level in the trustworthiness set.

It can be learned that, when the quantity of protocol packets stored in the first network device is less than the first threshold or the quantity of routes stored in the first network device is less than the first threshold, the first network device stores, in the trustworthiness set, the second identifier set and the second trustworthiness level that correspond to the first protocol packet. In this way, when the quantity of protocol packets stored in the first network device is greater than or equal to the first threshold or the quantity of protocol packets stored in the first network device is greater than or equal to the first threshold, the first network device can perform different processing on the protocol packet depending on whether the protocol packet is trustworthy.

According to the method described in the first aspect, the first network device uses the trustworthiness set, so that when the first network device receives the protocol packet and the memory exceeds the limit (the quantity of stored protocol packets is greater than or equal to the first threshold or the quantity of stored routes is greater than or equal to the first threshold), the first network device can determine, based on an identifier set carried in the protocol packet and the trustworthiness set, to perform different processing on the protocol packet. It can be learned that, according to the foregoing method, not only a fault of the first network device that is caused when the memory exceeds the limit can be avoided, but also the first network device can learn the protocol packet under attack of massive protocol packets, to reduce or avoid impact of a route attack on a normal service.

According to a second aspect, this application provides a first network device, including a receiving unit and a processing unit.

The receiving unit is configured to receive a first protocol packet.

The processing unit is configured to process the first protocol packet based on a first quantity, the first protocol packet, and a trustworthiness set, where the first quantity includes a quantity of protocol packets stored in the first network device or a quantity of routes stored in the first network device.

In some possible designs, the trustworthiness set includes at least one identifier set and at least one trustworthiness level, and the at least one identifier set one-to-one corresponds to the at least one trustworthiness level; and before the receiving unit receives the first protocol packet, the receiving unit is further configured to receive a second protocol packet sent by a second network device, where the at least one identifier set includes a first identifier set, the at least one trustworthiness level includes a first trustworthiness level, the first identifier set corresponds to the first trustworthiness level, the first identifier set includes a first identifier, the first identifier set indicates a feature of a second protocol packet corresponding to the first identifier set and/or a network device that generates the second protocol packet, and the first trustworthiness level indicates a trustworthiness level of the second protocol packet corresponding to the first identifier.

In some possible designs, when the first identifier indicates a route corresponding to the second protocol packet, the first identifier set further includes a second identifier, and the second identifier indicates the network device that generates the second protocol packet.

In some possible designs, when the first identifier indicates a link corresponding to the second protocol packet, the first identifier set further includes a second identifier and a third identifier, the second identifier indicates a type of the second protocol packet, and the third identifier indicates the network device that generates the second protocol packet.

In some possible designs, the first trustworthiness level includes a time point at which the first receiving unit receives the second protocol packet, duration in which the receiving unit receives the second protocol packet, or a trustworthiness score given by the first network device to the second protocol packet.

In some possible designs, if the first quantity is greater than a first threshold, the processing unit is configured to obtain a second identifier set based on the first protocol packet; the processing unit is configured to determine, based on the second identifier set and the trustworthiness set, whether the first protocol packet is trustworthy; and the processing unit is configured to perform different processing on the first protocol packet based on the determining whether the first protocol packet is trustworthy.

In some possible designs, in response to a result that the first protocol packet is trustworthy, the processing unit is configured to store the first protocol packet; or the processing unit is configured to update a route table based on the first protocol packet; or in response to a result that the first protocol packet is untrustworthy, the processing unit is configured to discard the first protocol packet.

In some possible designs, the processing unit is configured to determine, based on that the trustworthiness set includes the second identifier set, that the first protocol packet is trustworthy; or if the trustworthiness set does not include the second identifier set, the processing unit is configured to determine, based on a third network device that sends the first protocol packet, that the first protocol packet is trustworthy.

In some possible designs, the trustworthiness set includes a second trustworthiness level, the second identifier set corresponds to the second trustworthiness level, and the processing unit is configured to determine, based on that the first trustworthiness level is lower than the second trustworthiness level, that the first protocol packet is trustworthy.

In some possible designs, before the processing unit determines, based on the third network device, that the first protocol packet is trustworthy, the processing unit is further configured to obtain a configuration, where the configuration indicates that a protocol packet sent by the third network device is trustworthy.

In some possible designs, before the first network device stores the first protocol packet, the processing unit is further configured to delete the second protocol packet.

In some possible designs, when the first quantity is less than a first threshold, the processing unit is configured to obtain a second identifier set and a second trustworthiness level based on the first protocol packet; and the processing unit is configured to store the second identifier set and the second trustworthiness level in the trustworthiness set.

When a memory exceeds a limit (the first quantity is greater than or equal to the first threshold) and a protocol packet is received, the first network device can determine, based on an identifier set carried in the protocol packet and the trustworthiness set, whether the protocol packet is trustworthy, to perform different processing on the protocol packet. It can be learned that under attack of massive protocol packets, the memory of the first network device does not exceed the limit, and no fault occurs when the memory exceeds the limit. In addition, the protocol packet can be further processed, to reduce or avoid impact of massive attack packets on a normal service.

According to a third aspect, this application provides a first network device. The first network device includes a processor and a memory. The processor executes code in the memory to implement some or all of the steps described in the first aspect.

According to a fourth aspect, this application provides a computer storage medium, storing computer instructions. The computer instructions are used to implement some or all of the steps described in the first aspect.

According to a fifth aspect, this application provides a network system, including a first network device. The first network device is configured to perform some or all of the steps described in the first aspect.

## BRIEF DESCRIPTION OF DRAWINGS

FIG. 1 is a schematic diagram of a network domain under attack of massive protocol packets according to this application;

FIG. 2 is a schematic flowchart of a protocol packet processing method according to this application;

FIG. 3A and FIG. 3B show a process of learning protocol packets by network device R3 under attack of massive LSPs according to this application;

FIG. 4 shows another process of learning protocol packets by network device R3 under attack of massive LSPs according to this application;

FIG. 5A and FIG. 5B show a process of learning protocol packets by network device R3 under attack of massive LSAs according to this application;

FIG. 6 shows another process of learning protocol packets by network device R3 under attack of massive LSAs according to this application;

FIG. 7A and FIG. 7B show a process of learning protocol packets by network device R3 under attack of massive update packets according to this application;

FIG. 8 shows another process of learning protocol packets by network device R3 under attack of massive update packets according to this application;

FIG. 9 is a schematic diagram of a structure of a first network device according to this application; and

FIG. 10 is a schematic diagram of a structure of another first network device according to this application.

## DESCRIPTION OF EMBODIMENTS

The following describes in detail embodiments of this application with reference to the accompanying drawings.

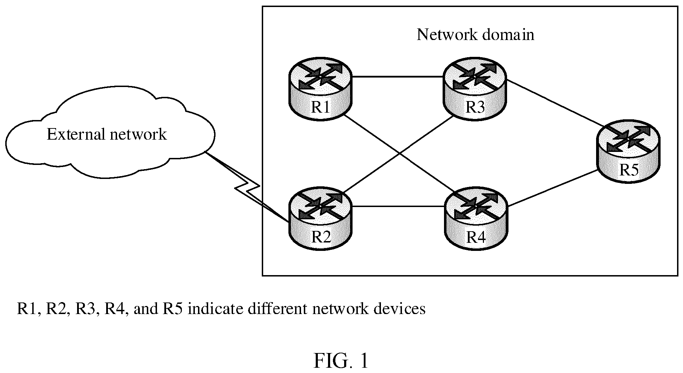

First, refer to FIG. 1. A network domain in FIG. 1 includes network device R1, network device R2, network device R3, network device R4, and network device R5, and an external network includes at least one network device. The network devices in the network domain discover routing information in a network by running a network protocol, to implement network-wide sharing. Common network protocols include the intermediate system to intermediate system (intermediate system to intermediate system, IS-IS) protocol, the open shortest path first (open shortest path first, OSPF) protocol, the border gateway protocol (border gateway protocol, BGP), and the like. The network device in the external network and the network device in the network domain may run different network protocols. For example, the network device in the network domain runs the IS-IS protocol, and the network device in the external network runs the OSPF protocol.

When all the network devices in the network domain go online normally, each network device floods, to the network domain, a trustworthy protocol packet that is generated based on a local interface state and routing information. In embodiments of this application, routing information packets advertised and sent by devices in a network to each other are referred to as protocol packets, for example, IS-IS link state protocol (link state protocol, LSP) packets, OSPF link state advertisement (link state advertisement, LSA) packets, or BGP route update (update) packets.

It is assumed that network device R2 suffers a route attack after a period of time. In this case, network device R2 floods, to the network domain, a large quantity of untrustworthy protocol packets carrying forged routing information, so that another network device in the network domain generates an incorrect route, causing interference to normal communication between the network devices. In this case, a large quantity of protocol packets and a large amount of routing information exist in the network domain. Some network devices may fail to fully carry the protocol packets and the routing information due to limited hardware resources. Consequently, faults such as repeated restarts occur, and normal running of the network is severely affected.

Flooding in this application means that, after a network device sends a protocol packet to a neighboring network device, the neighboring network device transmits the same protocol packet to another neighbor other than the network device that sends the protocol packet, and transmits the protocol packet to all the network devices in the network domain level by level in a same manner. For example, after obtaining a protocol packet, network device R2 sends the protocol packet to network device R3 and network device R4. After receiving the protocol packet, network device R3 sends the protocol packet to network device R1 and network device R5. After receiving the protocol packet, network device R4 sends the protocol packet to network device R1 and network device R5, so that all the network devices in the network domain obtain the protocol packet.

To avoid device faults caused by storing a large quantity of protocol packets and routes in the network device, a maximum quantity of routes to be imported is usually configured in a network device at the boundary of the network domain, to limit a quantity of routes to be imported into the network domain. Imported routes may specifically include: a static route, an Internet (Internet) route, a direct route, a route learned based on another routing protocol (for example, a BGP route that is imported into an IS-IS network domain), a forged route, and the like. The method of configuring the maximum quantity of routes to be imported can limit a quantity of protocol packets and routes in the network domain to some extent. However, when a non-attack route flaps in the network domain, the network device at the boundary of the network domain cannot re-import a flapping valid route because a quantity of imported routes reaches an upper limit. Consequently, a normal service is affected. In addition, a maximum quantity of routes that can be learned may be further configured in a network device that runs the BGP, to limit a quantity of protocol packets and routes that are to be stored in the network device. However, when a valid route stored in the network device that runs the BGP flaps, because a quantity of routes stored in the network device reaches an upper limit, the network device cannot relearn the flapping valid route, and therefore cannot perform normal service access.

In view of the foregoing problem, this application provides a protocol packet processing method. Before the method in embodiments of this application is described, related concepts in embodiments of this application are first described.

The IS-IS protocol is an interior gateway protocol (interior gateway protocol, IGP), and is mainly used in an autonomous system (autonomous system, AS). Based on the IS-IS protocol, LSP packets are exchanged between network devices that establish an IS-IS neighbor relationship, so that all network devices in an IS-IS network domain form a same link state database (link state database, LSDB). Then, a shortest path first (shortest path first, SPF) algorithm is used to perform route calculation and generate a local route table, to guide data packet forwarding.

An LSP is a protocol packet used to advertise a link state message of a network device that runs the IS-IS protocol (which is referred to as an IS-IS network device for short below). When the IS-IS network device is initialized or a structure of a network domain in which the IS-IS network device is located changes (for example, a state of a directly connected interface of the IS-IS network device changes, or the IS-IS network device learns an external network route), the IS-IS network device generates an LSP and advertises the LSP to an IS-IS neighbor of the IS-IS network device, to notify another IS-IS network device in the IS-IS network domain of changed link state information. When receiving the LSP, the another IS-IS network device stores the LSP in a local LSDB and obtains a corresponding network topology based on link state information carried in the LSP. Therefore, all the network devices in the IS-IS network domain have the same LSDB. The LSP is identified by an LSP ID. The LSP ID includes a system identifier (system ID), a pseudonode ID (pseudonode ID), and an LSP number (LSP number). The system identifier is an identifier of a network device that generates the LSP, the pseudonode ID identifies whether the LSP is a pseudonode LSP generated by a designated intermediate system (designated intermediate system, DIS), and the LSP number identifies whether the LSP is fragmented.

The OSPF protocol is an IGP based on a link state and is mainly used in a single AS. In an OSPF network domain, network devices that run the OSPF protocol (which are referred to as OSPF network devices for short below) establish an OSPF neighbor relationship with each other, and send LSA packets generated by the network devices to other OSPF neighbors. After receiving the LSA, the network device stores the LSA in a local LSDB, so that all the network devices in the OSPF network domain create the same LSDB, and then obtain through calculation an OSPF route table based on the LSDB by using an SPF algorithm, to guide data packet forwarding in the OSPF network domain.

Similar to the LSP, the LSA is a protocol packet used to advertise a link state of the OSPF network device. In other words, descriptions of routing information in the OSPF network domain are all encapsulated into the LSA for advertisement. When the OSPF network device is initialized or a structure of the OSPF network domain changes (for example, a state of a directly connected interface of the OSPF network device changes, or the OSPF network device learns a network route), the OSPF network device generates an LSA, and advertises the LSA to an OSPF neighbor, so that another OSPF network device in the OSPF network domain can learn a changed link state and generate a corresponding network topology. A link state (link state, LS) ID, a type of the LSA, and an identifier of a network device that generates the LSA that are carried in the LSA identify the LSA. There are 11 types of LSAs, which are specifically: a router LSA (router LSA), a network LSA (network LSA), a network summary LSA (network summary LSA), an autonomous system boundary router (AS boundary router, ASBR) summary LSA (ASBR summary LSA), an AS external LSA (AS external LSA), a group membership LSA (group membership LSA), a not so stubby area (not so stubby area, NSSA) LSA (NSSA LSA), an external attribute LSA (external attributes LSA), and an opaque LSA (opaque LSA).

The BGP is a distance-vector-based exterior gateway protocol (exterior gateway protocol, EGP), and is mainly used to select an optimal route between ASs and control route advertisement. A network device that runs the BGP cannot discover a route by itself. Instead, the network device needs to import routes of other protocols (such as an IS-IS route and an OSPF route), inject an optimal route into a BGP route table through learning, encapsulate the BGP route table into an update (update) packet, and advertise the update packet to another BGP neighbor. In this way, a data packet can be forwarded between ASs.

The update packet is used to exchange routing information between BGP neighbors. One update packet may be used to advertise a plurality of reachable routes, and may be further used to withdraw a plurality of unreachable routes. When the BGP route table of the network device changes, the network device advertises, to the BGP neighbor, an update packet that carries incremental routing information (for example, newly added routing information, deleted routing information, or changed routing information), so that the BGP neighbor updates a local route table based on the update packet. After receiving the update packet, the network device obtains a route carried in the update packet. The update packet identifies each route by using a route prefix and a neighbor identifier. The route prefix is a destination Internet protocol (Internet protocol, IP) address in the route, and the neighbor identifier is a next-hop address in the route.

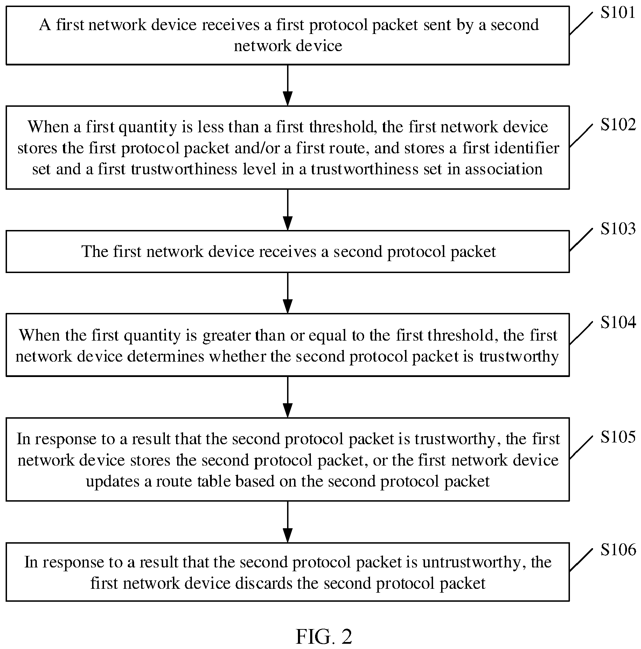

FIG. 2 is a schematic flowchart of a protocol packet processing method according to this application. The method includes but is not limited to the following steps.

S101: A first network device receives a first protocol packet sent by a second network device.

Herein, the first protocol packet sent by the second network device may be generated by the second network device, or may be generated by another network device and forwarded by the second network device.

S102: When a first quantity is less than a first threshold, the first network device stores the first protocol packet and/or a first route, and stores a first identifier set and a first trustworthiness level in a trustworthiness set in an associated manner.

The first protocol packet indicates the first network device to generate the first route. The first quantity includes a quantity of protocol packets stored in the first network device or a quantity of routes stored in the first network device. The first threshold includes a maximum quantity of protocol packets to be stored in the first network device or a maximum quantity of routes to be stored in the first network device. The first protocol packet carries the first identifier set, and the first identifier set indicates a feature of the first protocol packet and/or a network device that generates the first protocol packet. There is a correspondence between the first identifier set and the first trustworthiness level. The first trustworthiness level indicates a trustworthiness level of the first protocol packet. The trustworthiness set includes at least one identifier set and at least one trustworthiness level, and the at least one identifier set one-to-one corresponds to the at least one trustworthiness level. The at least one identifier set includes the first identifier set, and the at least one trustworthiness level includes the first trustworthiness level. The identifier set indicates a feature of a protocol packet corresponding to the identifier set and/or a network device that generates the protocol packet. The trustworthiness level indicates a trustworthiness level of a corresponding protocol packet.

In a specific embodiment of this application, the identifier set includes a first identifier, and the identifier set indicates the feature of the protocol packet and/or the network device that generates the first protocol packet. For example, when the protocol packet is an LSP, the identifier set includes an LSP ID, and the LSP ID indicates a network device that generates the LSP, whether the LSP is fragmented, and whether the LSP is a pseudonode LSP. When the first identifier indicates a route corresponding to the protocol packet, the first identifier set further includes a second identifier, and the second identifier indicates the network device that generates the protocol packet. For example, when the protocol packet is an update packet, the first identifier set includes a route prefix and a neighbor identifier. The route prefix indicates a route in the update packet, and the neighbor identifier indicates a network device that generates the update packet. When the first identifier indicates a link corresponding to the first protocol packet, the first identifier set further includes a second identifier and a third identifier. The second identifier indicates a type of the first protocol packet, and the third identifier indicates the network device that generates the first protocol packet. For example, when the protocol packet is an LSA, the first identifier set includes an LS ID, a type of the LSA, and an identifier of a network device that generates the LSA. The LS ID indicates a link corresponding to the LSA, the type of the LSA indicates the type of the LSA, and the identifier of the network device that generates the LSA indicates the network device that generates the LSA.

In a specific embodiment of this application, the trustworthiness level includes a time point at which the first network device receives the protocol packet, duration in which the first network device receives the protocol packet, or a trustworthiness score given by the first network device to the received protocol packet. The trustworthiness level indicates the trustworthiness level of the corresponding protocol packet. Specifically, an earlier time point at which the first network device receives the protocol packet indicates a higher trustworthiness level corresponding to the protocol packet, and indicates that the protocol packet is more trustworthy. Longer duration in which the first network device receives the protocol packet indicates a higher trustworthiness level corresponding to the protocol packet, and indicates that the protocol packet is more trustworthy. A higher trustworthiness score given by the first network device to the protocol packet indicates a higher trustworthiness level corresponding to the protocol packet, and indicates that the protocol packet is more trustworthy.

In a specific embodiment of this application, the trustworthiness score given by the first network device to the protocol packet may be set by the first network device based on the time point at which the first network device receives the protocol packet, may be set by the first network device based on the duration in which the first network device receives the protocol packet, may be set by the first network device based on a quantity of protocol packets sent by a same network device, or the like. This is not specifically limited herein. For example, the first network device evaluates a protocol packet received within a time point $t_1$ to a time point $t_3$ as A, and evaluates a protocol packet received within time point $t_3$ to a time point $t_2$ as B, where $t_1 < t_3 < t_2$. For another example, the first network device evaluates a packet whose duration is longer than a time period T as A, and evaluates a packet whose duration is shorter than or equal to T as B. For another example, if the first network device receives, within a time point $t_1$ to a time point $t_3$, 100000 protocol packets sent by the second network device, and receives, within time point $t_1$ to time point $t_3$, 10 protocol packets sent by a third network device, the first network device sets a trustworthiness score of the protocol packets sent by the second network device to A, and sets a trustworthiness score of the protocol packets sent by the third network device to B.

In a specific embodiment of this application, a storage manner of the trustworthiness set in the first network device may be permanent storage, temporary storage, dynamic aging, or the like. This is not specifically limited herein. The first network device may store trustworthiness levels in the trustworthiness set in a manner of sorting the trustworthiness levels in descending or ascending order of values of the trustworthiness levels, and correspondingly store the identifier set. The first network device may further store the trustworthiness level and the identifier set based on the time point at which the protocol packet is received, and so on. This is not specifically limited herein. For a specific representation form of the trustworthiness set, refer to Table 1 to Table 3 below.

S103: The first network device receives a second protocol packet.

S104: When the first quantity is greater than or equal to the first threshold, the first network device determines whether the second protocol packet is trustworthy.

In a specific implementation, after receiving the second protocol packet, the first network device determines that the first quantity is greater than the first threshold, to be specific, a quantity of protocol packets currently stored in the first network device is greater than the maximum quantity of protocol packets to be stored in the first network device, or a quantity of routes currently stored in the first network device is greater than the maximum quantity of routes to be stored in the first network device. In this case, the first network device obtains a second identifier set based on the second protocol packet. The second identifier set indicates a feature of the second protocol packet corresponding to the second identifier set and/or a network device that generates the second protocol packet. Then, the first network device determines, based on the second identifier set and the trustworthiness set, whether the second protocol packet is trustworthy. Specific content of this step is described in detail in the following example 1 and example 2.

S105: In response to a result that the second protocol packet is trustworthy, the first network device stores the second protocol packet, or the first network device updates a route table based on the second protocol packet.

In a specific embodiment of this application, in response to the result that the second protocol packet is trustworthy, the first network device first deletes the first protocol packet, and then stores the second protocol packet; or the first network device first deletes the first route, and then updates the route table based on the second protocol packet. In addition, the first network device further stores the second identifier set and a trustworthiness level of the second protocol packet in the trustworthiness set. Specific content of this step is described in the following step 21 to step 23.

S106: In response to a result that the second protocol packet is untrustworthy, the first network device discards the second protocol packet.

In a specific implementation, in response to the result that the second protocol packet is untrustworthy, the first network device discards the second protocol packet, or forwards the second protocol packet to another network device, or sends a route update message to another network device based on the second protocol packet. For example, when the second protocol packet is an LSP or an LSA, if the second protocol packet is untrustworthy, the first network device discards the second protocol packet, or forwards the second protocol packet to the another network device. When the second protocol packet is an update packet, if the second protocol packet is untrustworthy, the first network device discards the second protocol packet, or sends the route update message to the another network device based on the second protocol packet.

The following example 1 and example 2 describe in detail a specific procedure in which the first network device determines whether the second protocol packet is trustworthy in step S104.

Example 1: The first network device determines, based on that the trustworthiness set includes the second identifier set, that the second protocol packet is trustworthy.

In a specific implementation, the first network device obtains the second identifier set based on the second protocol packet, and then matches the second identifier set with the identifier set in the trustworthiness set. The second identifier set includes at least one identifier, and the second identifier set indicates the feature of the second protocol packet corresponding to the second identifier set and/or the network device that generates the second protocol packet. For specific descriptions of the second identifier set, refer to descriptions about the identifier set in step S102.

In a specific embodiment of this application, before the first network device receives the second protocol packet, the first network device receives a third protocol packet, stores the third protocol packet, and/or updates a route table based on the third protocol packet. The first network device further stores a third identifier set and a third trustworthiness level in the trustworthiness set. The third trustworthiness level indicates a trustworthiness level of the third protocol packet. The third trustworthiness level includes a time point at which the first network device receives the third protocol packet, duration in which the first network device receives the third protocol packet, or a trustworthiness score given by the first network device to the third protocol packet. Then, the first network device deletes the third protocol packet and/or a route generated based on the third protocol packet, but the trustworthiness set may still store the third identifier set and the third trustworthiness level.

In an example, when the first network device determines that the third identifier set included in the trustworthiness set is the same as the second identifier set, the first network device may determine that the second protocol packet is trustworthy. The third identifier set includes at least one identifier, and the third identifier set indicates a feature of the third protocol packet corresponding to the third identifier set and/or a network device that generates the third protocol packet. For specific descriptions of the third identifier set, refer to descriptions about the identifier set in step S102.

In another example, when the first network device determines that the third identifier set stored in the trustworthiness set is the same as the second identifier set, the first network device may further determine, depending on whether the third trustworthiness level corresponding to the third identifier set meets a determining condition, whether the second protocol packet is trustworthy. When the third trustworthiness level meets the determining condition, the first network device determines that the second protocol packet is trustworthy. The determining condition includes at least one of the following:

(1) First preset trustworthiness level: The first network device compares the third trustworthiness level with the first preset trustworthiness level, and if the third trustworthiness level is greater than or equal to the first preset trustworthiness level, the first network device determines that the second protocol packet is trustworthy. The first preset trustworthiness level includes a preset time point, preset duration, or a preset trustworthiness score.

For example, the first network device compares the time point at which the first network device receives the third protocol packet with the preset time point, and if the time point at which the first network device receives the third protocol packet is earlier than or equal to the preset time point, the first network device determines that the second protocol packet is trustworthy.

For another example, the first network device compares the duration in which the first network device receives the third protocol packet with the preset duration, and if the duration in which the first network device receives the third protocol packet is longer than or equal to the preset duration, the first network device determines that the second protocol packet is trustworthy.

For another example, the first network device compares the trustworthiness score given by the first network device to the third protocol packet with the preset trustworthiness score, and if the trustworthiness score given by the first network device to the third protocol packet is greater than or equal to the preset trustworthiness score, the first network device determines that the second protocol packet is trustworthy.

(2) First preset duration: The first network device obtains the time point at which the first network device receives the third protocol packet. Then, the first network device calculates a difference between the time point at which the second protocol packet is received and the time point at which the first network device receives the third protocol packet, and compares the difference with the first preset duration. If the difference is longer than first preset duration, the first network device determines that the third protocol packet is trustworthy; or if the difference is shorter than first preset duration, the first network device determines that the third protocol packet is untrustworthy.

It should be noted that the first preset trustworthiness level (including the preset time point, the preset duration, and the preset trustworthiness score) and the first preset duration may be manually configured, or may be dynamic baseline values obtained by the first network device through calculation based on the trustworthiness levels in the trustworthiness set. For example, the first network device obtains an average value, a median, or a mode of the trustworthiness levels in the trustworthiness set. This is not specifically limited herein.

Example 2: The first network device determines, based on the third network device that sends the second protocol packet, that the second protocol packet is trustworthy

In a specific implementation, when the first network device receives the second protocol packet from a target port, the first network device obtains address information of a device that forwards the second protocol packet to the first network device, to determine that the device that forwards the second protocol packet to the first network device is the third network device. In this case, the first network device determines that the second protocol packet is trustworthy. Alternatively, the first network device obtains the second identifier set based on the second protocol packet, and then determines, based on the second identifier set, that the second protocol packet is generated by the third network device, to determine that the third protocol packet is trustworthy.

In a specific embodiment of this application, before the first network device determines, based on the third network device, that the second protocol packet is trustworthy, the first network device obtains a configuration, where the configuration indicates that a protocol packet sent by the third network device is trustworthy.

In an example, the first network device may determine, in the following manner, that the protocol packet sent by the third network device is trustworthy: Before the first network device receives the second protocol packet, the first network device receives a fourth protocol packet sent by the third network device, and stores the fourth protocol packet or updates a route table based on the fourth protocol packet. After second preset duration, if the first network device further stores the fourth protocol packet or a route generated based on the fourth protocol packet, the first network device adds the third network device to a locally configured set of trustworthy network devices, and the first network device determines that all protocol packets subsequently sent by the third network device are trustworthy. Similar to the foregoing first preset duration, the second preset duration may be manually configured, or may be a dynamic baseline value obtained by the first network device through calculation based on the duration in which the first network device receives the protocol packet. This is not specifically limited herein.

In another example, the first network device may determine, in the following manner, that the protocol packet sent by the third network device is trustworthy: A set of trustworthy network devices is configured in the first network device, and the set of trustworthy network devices includes the third network device. In this case, the first network device determines that all protocol packets sent by the third network device are trustworthy.

Herein, the protocol packets (including the second protocol packet and the fourth protocol packet) sent by the third network device may be generated by the third network device, or may be generated by another network device and forwarded by the third network device.

The following describes step S105 in detail with reference to step 21 to step 23.

Step 21: In response to a result that the second protocol packet is trustworthy, the first network device deletes the first protocol packet or the first route.

In a specific embodiment of this application, the first trustworthiness level may be a lowest trustworthiness level in the trustworthiness set, or may be any trustworthiness level lower than a second preset trustworthiness level in the trustworthiness set, where the second preset trustworthiness level is lower than or equal to the first trustworthiness level.

If the first trustworthiness level is the lowest trustworthiness level in the trustworthiness set, the first network device may delete the first protocol packet or the first route in the following manner: The first network device obtains, by comparing all the trustworthiness levels included in the trustworthiness set, the lowest trustworthiness level being the first trustworthiness level and the first identifier set corresponding to the first trustworthiness level. Then, the first network device determines, based on the first identifier set, the first protocol packet or the first route corresponding to the first identifier set, to delete the first protocol packet or the first route stored in the first network device. It can be learned that, the protocol packet or the route corresponding to the lowest trustworthiness level is deleted from the trustworthiness set, so that accuracy of deleting an untrustworthy protocol packet or deleting an untrustworthy route can be greatly improved, thereby effectively preventing the first network device from incorrectly deleting a trustworthy protocol packet or route.

If the first trustworthiness level is any trustworthiness level lower than the second preset trustworthiness level in the trustworthiness set, the first network device may delete the first protocol packet or the first route in the following manner: The first network device separately compares the trustworthiness levels included in the trustworthiness set with the second preset trustworthiness level, to obtain at least one trustworthiness level lower than the second preset trustworthiness level, then selects any trustworthiness level (herein, the first trustworthiness level) from the at least one trustworthiness level, and finds the first identifier set corresponding to the first trustworthiness level from the trustworthiness set. Then, the first network device determines, based on the first identifier set, the first protocol packet or the first route corresponding to the first identifier set, to delete the first protocol packet or the first route stored in the first network device.

In a specific embodiment of this application, the second preset trustworthiness level is lower than or equal to the first preset trustworthiness level in the foregoing example 1. In addition, similar to the first preset trustworthiness level, the second preset trustworthiness level may be manually configured, or may be a dynamic baseline value obtained by the first network device through calculation based on the trustworthiness levels in the trustworthiness set, or the like. This is not specifically limited herein.

Step 22: The first network device stores the second protocol packet, or updates a route table based on the second protocol packet.

Step 23: The first network device stores the second identifier set and the trustworthiness level of the second protocol packet in the trustworthiness set.

In a possible embodiment, if the first network device determines, based on the example 1 in S104, that the second protocol packet is trustworthy, the first network device uses the third trustworthiness level corresponding to the second identifier set (that is, the third identifier set) in the trustworthiness set as the trustworthiness level of the second protocol packet, and continues to store the third identifier set and the third trustworthiness level in the trustworthiness set.

In another possible embodiment, if the first network device determines, based on the example 2 in S 104, that the second protocol packet is trustworthy, the first network device stores the second identifier set and the trustworthiness level of the second protocol packet in the trustworthiness set. The trustworthiness level of the second protocol packet includes a time point at which the first network device receives the second protocol packet, duration in which the first network device receives the second protocol packet, or a trustworthiness score given by the first network device to the second protocol packet.

It should be understood that, in the foregoing embodiment, a reason why the first network device determines the trustworthiness level of the protocol packet based on the time point at which the first network device receives the protocol packet or the duration in which the first network device receives the protocol packet, to determine whether the protocol packet is trustworthy is as follows: For a network domain under a route attack, a trustworthy protocol packet is usually a protocol packet generated based on a link state of a network device when the network device goes online, and an untrustworthy protocol packet is usually imported into the network domain when the network device is suddenly under a route attack after the network device goes online. Therefore, a receiving time point at which the network device receives the trustworthy protocol packet is clearly earlier than a receiving time point at which the network device receives the untrustworthy protocol packet, and duration of the trustworthy protocol packet in the network device is clearly longer than duration of the untrustworthy protocol packet in the network device. In other words, a time point at which the network device receives a protocol packet with a higher trustworthiness level is earlier than a time point at which the network device receives a protocol packet with a lower trustworthiness level, and duration of the protocol packet with the higher trustworthiness level in the network device is longer than duration of the protocol packet with the lower trustworthiness level in the network device. It should be further understood that, in the foregoing embodiment, the trustworthiness set includes an identifier set of a non-locally generated protocol packet and a trustworthiness level corresponding to the identifier set. This is because the network device considers by default that a locally generated protocol packet is trustworthy, and trustworthiness levels do not need to be compared with each other.

In the protocol packet processing method provided in this application, the first network device runs at least one network protocol, for example, the IS-IS protocol, the OSPF protocol, the BGP, the routing information protocol (routing information protocol, RIP), the label distribution protocol (label distribution protocol, LDP), or the protocol independent multicast (protocol independent multicast, PIM). This is not specifically limited herein. Network devices exchange protocol packets to transfer network protocols. Different network protocols need to be transferred by using different protocol packets. For example, when the first network device runs the IS-IS protocol, a protocol packet is an LSP, and an identifier set corresponding to the protocol packet includes an LSP ID. For details, refer to step 31 to step 35 and step 41 to step 44 below. When the first network device runs the OSPF protocol, a protocol packet is an LSA, and an identifier set corresponding to the protocol packet includes an LS ID, a type of the LSA, and an identifier of a network device that generates the LSA. For details, refer to step 51 to step 55 and step 61 to step 64 below. When the first network device runs the BGP, a protocol packet is an update packet, and an identifier set corresponding to the protocol packet includes a route prefix and a neighbor identifier. For details, refer to step 71 to step 75 and step 81 to step 84 below.

In the foregoing method, the first network device stores, in the trustworthiness set, the identifier set carried in the protocol packet and the trustworthiness level of the protocol packet, so that when the first network device receives the protocol packet and the memory exceeds the limit (the first quantity is greater than or equal to the first threshold), the first network device can determine, based on the identifier set carried in the protocol packet and the trustworthiness set, whether the protocol packet is trustworthy, to perform different processing on the protocol packet. It can be learned that, according to the foregoing method, not only a fault of the first network device that is caused when the memory exceeds the limit can be avoided, but also the first network device can learn the protocol packet under attack of massive protocol packets, to reduce or avoid impact of a route attack on a normal service.

With reference to the scenario in FIG. 1, the following describes the protocol packet processing method shown in FIG. 2 by using an example.

(1) The network domain shown in FIG. 1 is an IS-IS network domain: All network devices in the network domain run the IS-IS protocol.

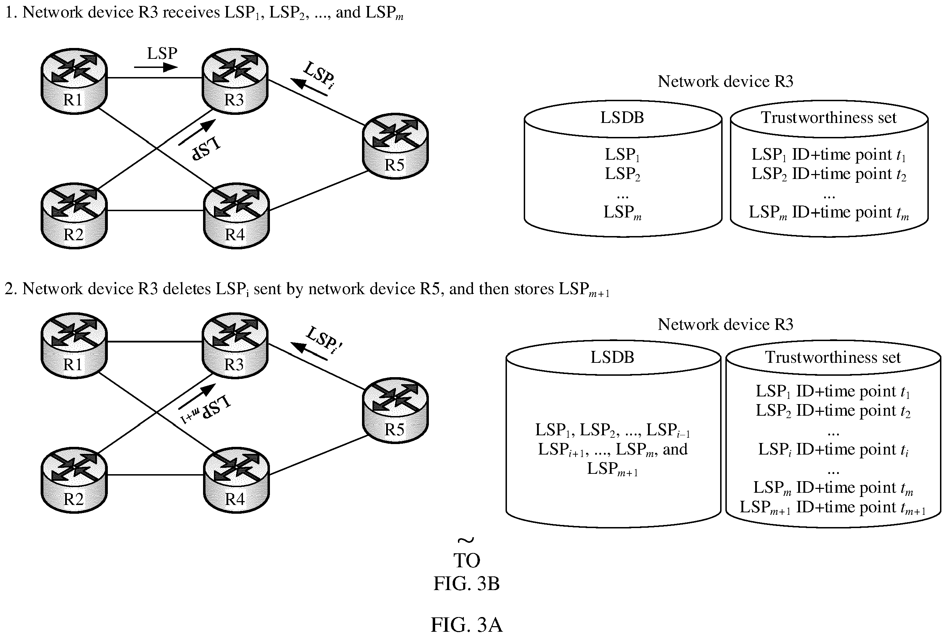

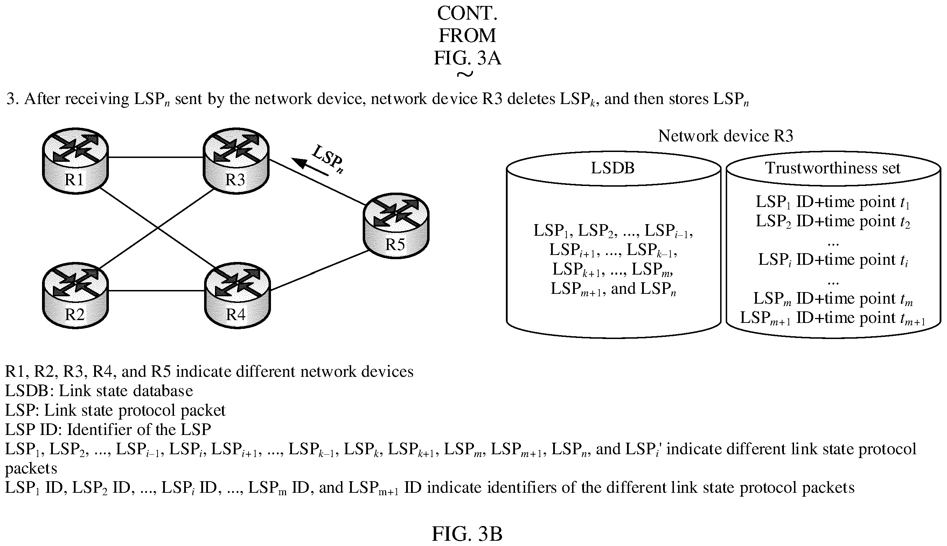

FIG. 3A and FIG. 3B show a possible process of learning protocol packets by network device R3 under attack of massive LSPs according to this application. Specific steps are as follows:

Step 31: Network device R3 receives $LSP_1$, $LSP_2$, ..., and $LSP_m$, and stores $LSP_1$, $LSP_2$, ..., and $LSP_m$ in a local LSDB. The LSDB of network device R3 can store a maximum of $m$ non-locally generated LSPs, where $m$ is a positive integer.

Step 32: Network device R3 stores $LSP_1$ ID, $LSP_2$ ID, ..., and $LSP_m$ ID, and time points $t_1$, $t_2$, ..., and $t_m$ in a trustworthiness set in an associated manner.

$LSP_1$ carries $LSP_1$ ID, $LSP_2$ carries $LSP_2$ ID, ..., and $LSP_m$ carries $LSP_m$ ID. $LSP_1$ ID, $LSP_2$ ID, ..., and $LSP_m$ ID identify $LSP_1$, $LSP_2$, ..., and $LSP_m$ respectively. Network device R3 receives $LSP_1$ at time point $t_1$, receives $LSP_2$ at time point $t_2$, ..., and receives $LSP_m$ at time point $t_m$. For a specific form of the trustworthiness set, refer to Table 1.

**Table 1. Trustworthiness set**

| Identifier set | Trustworthiness level |
|---|---|
| $LSP_1$ ID | $t_1$ |
| $LSP_2$ ID | $t_2$ |
| ... | ... |
| $LSP_m$ ID | $t_m$ |

It should be understood that the trustworthiness set shown in Table 1 is merely an example. During actual application, the trustworthiness set may further include more information, for example, sequence number information of the LSP and checksum information of the LSP. The trustworthiness level may be duration in which network device R3 obtains the LSP, or a trustworthiness score given by network device R3 to the LSP. This is not specifically limited herein.

Step 33: When network device R5 advertises a message for deleting LSP, to network device R3, network device R3 deletes LSP, stored in the local LSDB, and then stores $LSP_{m+1}$ in the local LSDB.

As described above, network device R3 receives, at time point $t_i$ LSP, sent by network device R5, where LSP, carries LSP, ID, LSP, ID identifies $LSP_i$, $1 \leq i \leq m$, and $i$ is a positive integer. In this step, network device R3 receives $LSP_{m+1}$ at time point $t_{m+1}$, where $LSP_{m+1}$ carries $LSP_{m+1}$ ID, $LSP_{m+1}$ ID identifies $LSP_{m+1}$, and $t_{m+1} > t_m$.

Specifically, when network device R5 deletes $LSP_i$, network device R5 sends $LSP_i'$ to network device R3. $LSP_i'$ carries LSP, ID, and link state information carried in $LSP_i'$ is null. When receiving $LSP_i'$, network device R3 finds, based on LSP, ID, LSP, stored in the local LSDB, and then changes, based on the link state information carried in $LSP_i'$, link state information corresponding to LSP, to null, to delete LSP, stored in the local LSDB. After deleting LSP, from the local LSDB, network device R3 obtains $LSP_{m+1}$. In this case, the LSDB of network device R3 has storage space to store $LSP_{m+1}$, and $LSP_{m+1}$ ID and time $t_{m+1}$ are stored in the trustworthiness set in an associated manner. Therefore, after network device R3 deletes LSP, and stores $LSP_{m+1}$, the LSDB of network device R3 still stores m LSPs, that is, $LSP_1$, $LSP_2$, ..., $LSP_{i-1}$, $LSP_{i+1}$, ..., $LSP_m$, and $LSP_{m+1}$. The trustworthiness set stores identifier sets of m+1 LSPs and m+1 time points, that is, $LSP_1$ ID, $LSP_2$ ID, ..., $LSP_m$ ID, and $LSP_{m+1}$ ID, and time points $t_1$, $t_2$, ..., $t_m$, and $t_{m+1}$.

Step 34: Network device R3 receives $LSP_n$ sent by network device R5.

Network device R3 receives $LSP_n$ at time point $t_n$, where $LSP_n$ carries LSP, ID, $n > m+1$, $t_n > t_{m+1}$ and $n$ is a positive integer.

Step 35: Network device R3 deletes $LSP_k$ stored in the local LSDB to store $LSP_m$ and continues to store $LSP_i$ ID and time point $t_i$ in the trustworthiness set.

Network device R3 receives $LSP_k$ at time point $t_k$, where $LSP_k$ carries $LSP_k$ ID, $LSP_k$ ID identifies $LSP_k$, $i < k \leq m+1$,

and $k$ is a positive integer. Therefore, a trustworthiness level of $LSP_k$ is lower than a trustworthiness level of $LSP_i$. For example, $LSP_k$ is a protocol packet corresponding to an earliest time point in the trustworthiness set.

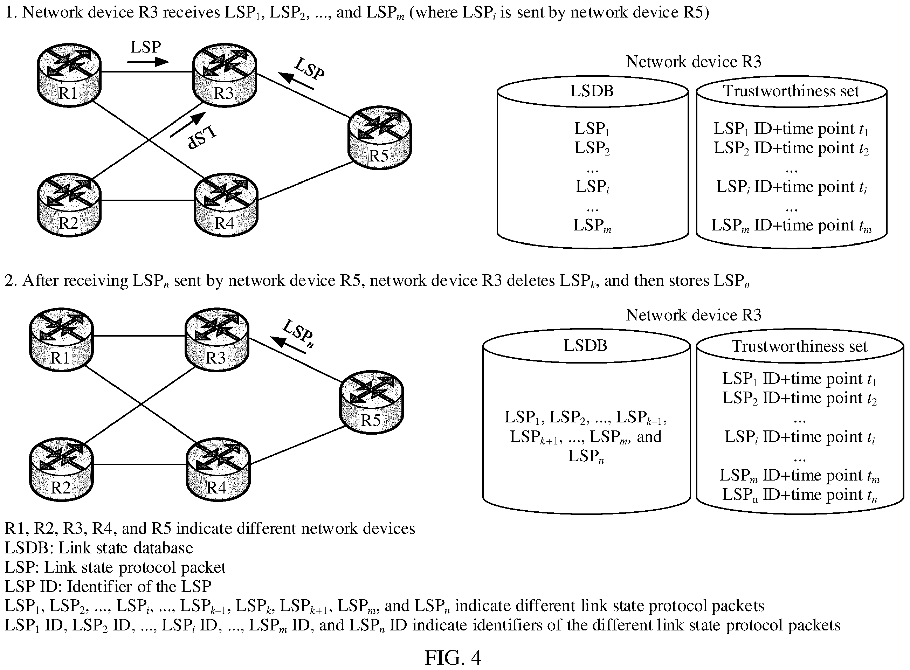

FIG. 4 shows another possible process of learning protocol packets by network device R3 under attack of massive LSPs according to this application. In this solution, network device R3 considers that a protocol packet sent by network device R5 is trustworthy. Specific steps are as follows:

Step 41: Network device R3 receives, at time point $t_i$, $LSP_i$ sent by network device R5, stores $LSP_i$ in a local LSDB, and stores $LSP_i$ and time point $t_i$ in a trustworthiness set in an associated manner.

The LSDB of network device R3 can store a maximum of $m$ non-locally generated LSPs, where $m$ is a positive integer, $LSP_i$ carries $LSP_i$ ID, $LSP_i$ ID identifies $LSP_i$, $1 \leq i \leq m$, and $i$ is a positive integer.

Step 42: After a period of time (second preset duration), network device R3 determines that LSP, is still stored in the local LSDB, and network device R3 determines that network device R5 is a trustworthy network device.

Step 43: Subsequently, if network device R2 suffers a route attack, network device R2 continuously sends massive LSPs to network device R3, so that a quantity of LSPs stored in the LSDB of network device R3 reaches $m$. In this case, the LSDB of network device R3 stores $LSP_1$, $LSP_2$, ..., and $LSP_m$. The trustworthiness set stores $LSP_1$ ID, $LSP_2$ ID, ..., and $LSP_m$ ID, and time points $t_1$, $t_2$, ..., and $t_m$.

$LSP_1$ carries $LSP_1$ ID, $LSP_2$ carries $LSP_2$ ID, ..., and $LSP_m$ carries $LSP_m$ ID. $LSP_1$ ID, $LSP_2$ ID, ..., and $LSP_n$ ID identify $LSP_1$, $LSP_2$, ..., and $LSP_m$ respectively. Network device R3 receives $LSP_1$ at time point $t_1$, receives $LSP_2$ at time point $t_2$, ..., and receives $LSP_m$ at time point $t_m$.

Step 44: Network device R3 receives, at time point $t_n$, $LSP_n$ sent by network device R5.

Network device R3 receives $LSP_n$ at time point $t_n$, where $LSP_n$ carries $LSP_n$ ID, $n>m+1$, $t_n>t_{m+1}$ and $n$ is a positive integer.

Step 45: Network device R3 deletes $LSP_k$ stored in the local LSDB to store $LSP_n$, and stores $LSP_n$ ID and time point $t_n$ in the trustworthiness set.

Network device R3 receives $LSP_k$ at time point $t_k$, where $LSP_k$ carries $LSP_k$ ID, $LSP_k$ ID identifies $LSP_k$, $i<k \leq m+1$, and $k$ is a positive integer. Therefore, a trustworthiness level of $LSP_k$ is lower than a trustworthiness level of $LSP_i$. For example, $LSP_k$ is a protocol packet corresponding to an earliest time point in the trustworthiness set.

In this solution, network device R3 may consider that all protocol packets sent by network device R5 are trustworthy because network device R3 has received the protocol packet sent by network device R5, as described in the foregoing steps. Alternatively, network device R3 may be configured to consider that all protocol packets sent by network device R5 are trustworthy.

(2) The network domain shown in FIG. 1 is an OSPF network domain. All network devices in the network domain run the OSPF protocol.

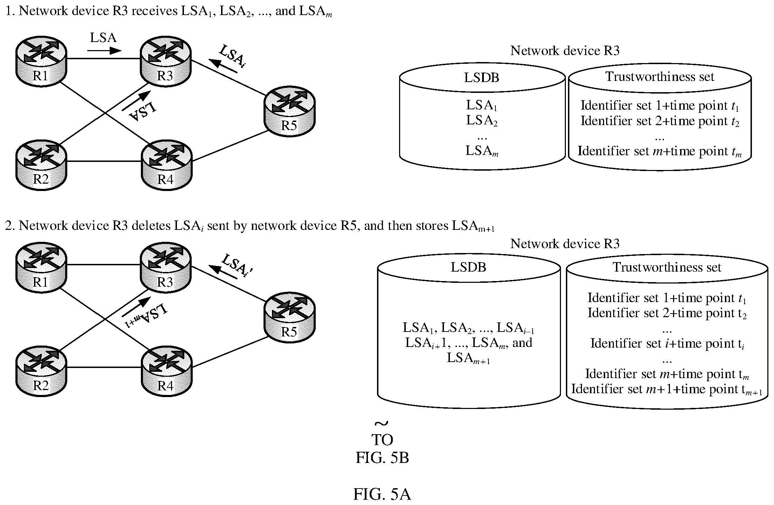

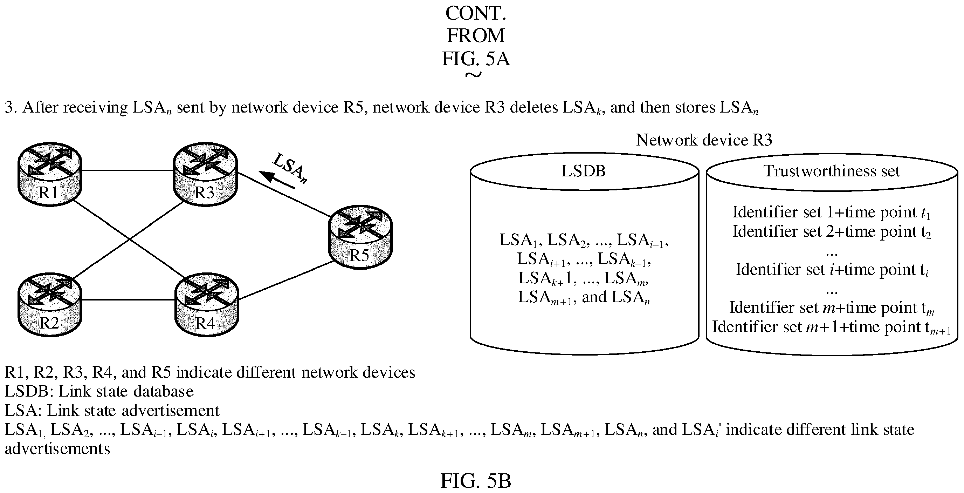

FIG. 5A and FIG. 5B show a possible process of learning protocol packets by network device R3 under attack of massive LSAs according to this application. Specific steps are as follows:

Step 51: Network device R3 receives $LSA_1$, $LSA_2$, ..., and $LSA_m$, and stores $LSA_1$, $LSA_2$, ..., and $LSA_m$ in a local LSDB. The LSDB of network device R3 can store a maximum of m non-locally generated LSAs, where m is a positive integer.

Step 52: Network device R3 stores identifier set 1, identifier set 2, ..., and identifier set $m$, and time points $t_1$, $t_2$, ..., and $t_m$ in a trustworthiness set in an associated manner.

$LSA_1$ carries identifier set 1, and identifier set 1 includes $LS_1$ ID, type $T_1$ of $LSA_1$, and identifier $A_1$ of a network device that generates $LSA_1$; $LSA_2$ carries identifier set 2, and identifier set 2 includes $LS_2$ ID, type $T_2$ of $LSA_2$, and identifier $A_2$ of a network device that generates $LSA_2$; ..., $LSA_m$ carries identifier set $m$, and identifier set $m$ includes $LS_m$ ID, type $T_m$ of $LSA_m$, and identifier $A_m$ of a network device that generates $LSA_m$. Network device R3 can respectively determine, based on identifier set 1, identifier set 2, ..., and identifier set $m$, $LSA_1$, $LSA_2$, ..., and $LSA_m$, and the network devices that generate $LSA_1$, $LSA_2$..., and $LSA_m$. Network device R3 receives $LSA_1$ at time point $t_1$, network device R3 receives $LSA_2$ at time point $t_2$, ..., and network device R3 receives $LSA_m$ at time point $t_m$. For a specific form of the trustworthiness set, refer to Table 2.

**Table 2. Trustworthiness set**

| Identifier set | | | Trustworthiness level |
|---|---|---|---|
| LSA type | LS ID | Identifier of a network device that generates an LSA | |
| Type $T_1$ | $LS_1$ ID | Identifier $A_1$ | $t_1$ |
| Type $T_2$ | $LS_2$ ID | Identifier $A_2$ | $t_2$ |
| ... | ... | ... | ... |
| Type $T_m$ | $LS_m$ ID | Identifier $A_m$ | $t_m$ |

It should be understood that the trustworthiness set shown in Table 2 is merely an example. During actual application, the trustworthiness set may further include more information, for example, sequence number information of the LSA and checksum information of the LSA. The trustworthiness level may be duration in which network device R3 obtains the LSA, or a trustworthiness score given by network device R3 for the LSA.

Step 53: When network device R5 advertises a message for deleting LSA, to network device R3, network device R3 deletes LSA, stored in the local LSDB, and then stores $LSA_{m+1}$ in the local LSDB.

As described above, network device R3 receives, at time point $t_i$, LSA, sent by network device R5, where $LSA_i$ carries identifier set $i$, identifier set $i$ includes LS, ID, type $T_i$ of $LSA_i$, and identifier $A_i$ of a network device that generates $LSA_i$, identifier set $i$ identifies $LSA_i$, $1 \leq i \leq m$, and $i$ is a positive integer. In this step, network device R3 obtains $LSA_{m+1}$ at time point $t_{m+1}$, $LSA_{m+1}$ carries identifier set $m+1$, identifier set $m+1$ includes $LS_{m+1}$ ID, type $T_{m+1}$ of $LSA_{m+1}$, and identifier $A_{m+1}$ of a network device that generates $LSA_{m+1}$, identifier set $m+1$ identifies $LSA_{m+1}$, and $t_{m+1} > t_m$.

Specifically, when deleting $LSA_i$, network device R5 sends $LSA_i'$ to network device R3. $LSA_i'$ carries identifier i, and $LSA_i'$ is used to notify network device R5 to delete $LSA_i$. When network device R3 receives $LSA_i'$, the network device finds, based on identifier set $i$ carried in $LSA_i'$, LSA, stored in the local LSDB, to delete $LSA_i$ stored in the local LSDB. After network device R3 deletes $LSA_i$ from the local LSDB, network device R3 obtains $LSA_{m+1}$. In this case, the LSDB of network device R3 has storage space to store $LSA_{m+1}$, and identifier set $m+1$ and time point $t_{m+1}$ are stored in the trustworthiness set in an associated manner. Therefore, after network device R3 deletes LSA, and stores $LSA_{m+1}$, the LSDB of network device R3 stores $m$ LSAs, that is, $LSA_1$, $LSA_2$, ..., LSA-i, $LSA_{i+1}$, ..., $LSA_m$, and $LSA_{m+1}$. The trustworthiness set stores $m+1$ identifier sets and $m+1$ time points, that is, identifier set 1, identifier set 2, ..., identifier set $m$, and identifier set $m+1$, and time points $t_1$, $t_2$, ..., $t_m$, and $t_{m+1}$.

Step 54: Network device R3 receives $LSA_n$ sent by network device R5.

Network device R3 receives $LSA_n$ at time point $t_n$, where $LSP_n$ carries identifier set $i$, identifier set $i$ includes $LS_i$ ID, type $T_i$, and identifier $A_i$ of a network device that generates $LSA_i$, $n$ is a positive integer, $n > m+1$, $t_n > t_{m+1}$, and $n$ is a positive integer.

Step 55: Network device R3 deletes $LSA_k$ stored in the local LSDB to store $LSA_n$, and continues to store identifier set $i$ and time point $t_i$ in the trustworthiness set.

Network device R3 obtains $LSA_k$ at time point $t_k$, where $LSA_k$ carries identifier set $k$, identifier set $k$ includes $LS_k$ ID, type $T_k$, and identifier $A_k$ of a network device that generates $LSA_k$, $i < k \leq m+1$, and $k$ is a positive integer. Therefore, a trustworthiness level of $LSP_k$ is lower than a trustworthiness level of $LSP_i$. For example, $LSP_k$ is a protocol packet corresponding to an earliest time point in the trustworthiness set.

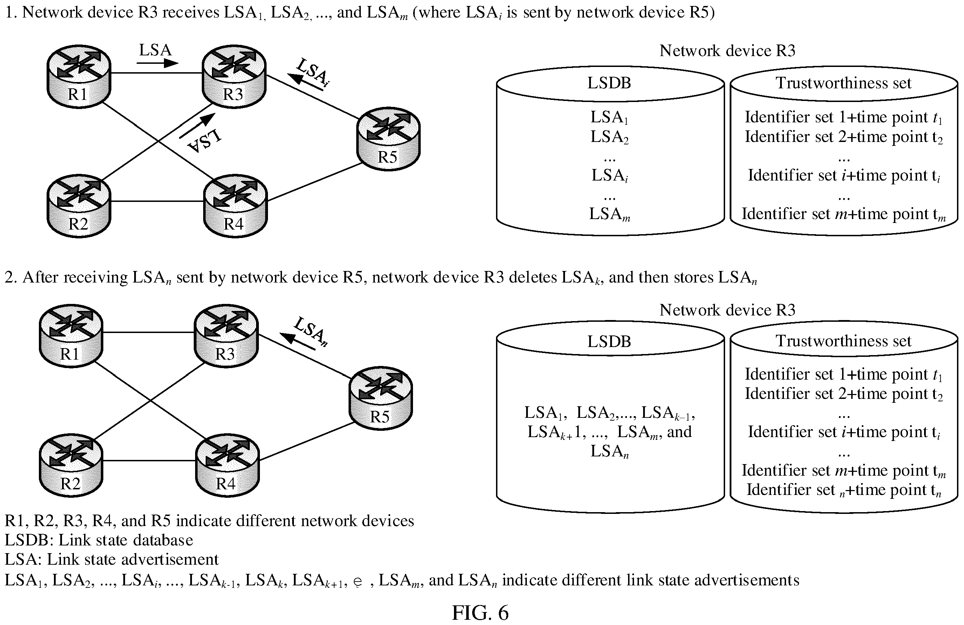

FIG. 6 shows another possible process of learning protocol packets by network device R3 under attack of massive LSAs according to this application. In this solution, network device R3 considers that a protocol packet sent by network device R5 is trustworthy. Specific steps are as follows:

Step 61: Network device R3 receives, at time point $t_i$, $LSA_i$ sent by network device R5, stores $LSA_i$ in a local LSDB, and stores identifier set $i$ and time point $t_i$ in a trustworthiness set in an associated manner.

The LSDB of network device R3 can store a maximum of $m$ non-locally generated $m$ LSAs, $m$ is a positive integer, $LSA_i$ carries identifier set $i$, identifier set $i$ includes an $LS_i$ ID, type $T_i$, and an identifier of $A_i$ of a network device that generates $LSA_i$, $1 \leq i \leq m$, and $i$ is a positive integer.

Step 62: After a period of time (second preset duration), network device R3 determines that $LSA_i$ is still stored in the local LSDB, and determines that network device R5 is a trustworthy network device.

Step 63: Subsequently, if network device R2 suffers a route attack, network device R2 continuously sends massive LSAs to network device R3, so that a quantity of LSAs stored in the LSDB of network device R3 reaches $m$. In this case, the LSDB of network device R3 stores $LSA_1$, $LSA_2$, ..., and $LSA_m$. The trustworthiness set stores identifier set 1, identifier set 2, ..., identifier set $m$, and time points $t_1$, $t_2$, ..., and $t_m$. For specific definitions of identifier set 1, identifier set 2, ..., identifier set $m$, and time points $t_1$, $t_2$, ..., and $t_m$, refer to step 52.

Step 64: Network device R3 receives, at time point $t_n$, $LSA_n$ sent by network device R5.

Network device R3 receives $LSA_n$ at time point $t_n$, where $LSP_n$ carries identifier set $n$, identifier set $n$ includes an $LS_n$ ID, type $T_n$, and identifier $A_n$ of a network device that generates $LSA_n$, $n$ is a positive integer, $n > m+1$, $t_n > t_{m+1}$, and $n$ is a positive integer.

Step 65: Network device R3 deletes $LSA_k$ stored in the local LSDB to store $LSA_n$, and stores $LSA_n$ ID and time point $t_n$ in the trustworthiness set. For detailed descriptions of $LSA_k$, specifically refer to step 55.

In this solution, network device R3 may consider that all protocol packets sent by network device R5 are trustworthy because network device R3 has received the protocol packet sent by network device R5, as described in the foregoing steps. Alternatively, network device R3 may be configured to consider that all protocol packets sent by network device R5 are trustworthy.

(3) The network domain shown in FIG. 1 is a BGP network domain. All network devices in the network domain run the BGP.

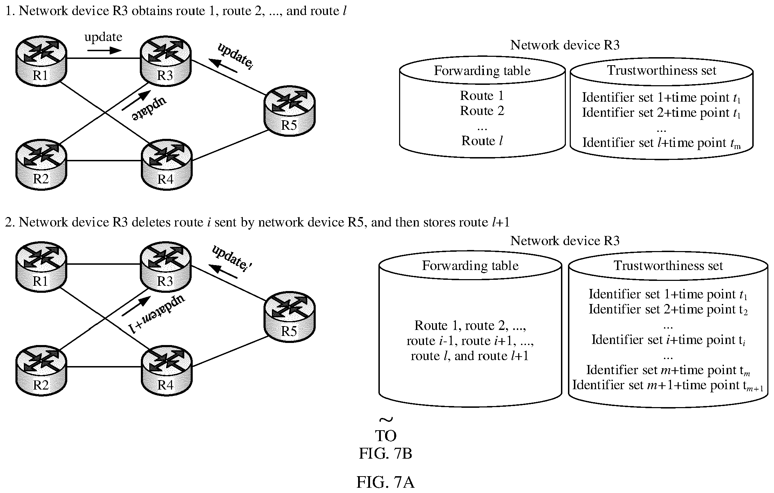

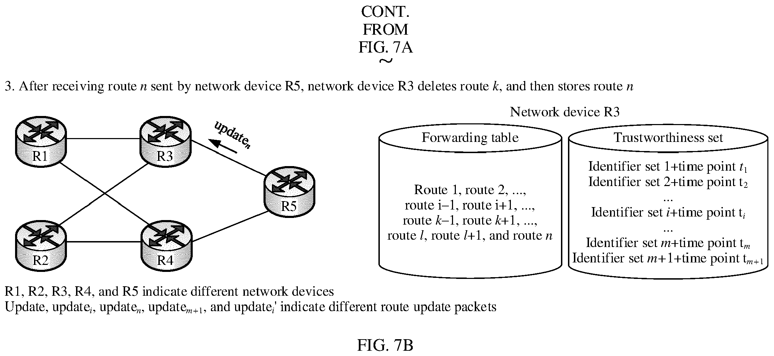

FIG. 7A and FIG. 7B show a possible process of learning protocol packets by network device R3 under attack of massive update packets according to this application. Specific steps are as follows:

Step 71: Network device R3 receives $update_1$, $update_2$, ..., and $update_m$, obtains route 1, route 2, ..., and route $l$ based on $update_1$, $update_2$, ..., and $update_m$, and then stores route 1, route 2, ..., and route $i$ in a local forwarding table.

The local forwarding table of network device R3 can store a maximum of $l$ non-locally generated routes, and $l$ and $m$ are positive integers. $Update_1$ includes $l-m+1$ routes, and each of $update_2$, $update_3$, ..., and $update_m$ includes one route. To be specific, $update_1$ includes route 1, route 2, ..., and route $l-m+1$, $update_2$ includes route $l-m+2$, ..., and $update_m$ includes route $l$.

Specifically, after obtaining $update_1$, network device R3 stores, in the local forwarding table, route 1, route 2, ..., and route $l-m+1$ that are generated by network device R3 based on update,; after obtaining $update_2$, network device R3 stores, in the local forwarding table, route $l-m+2$ that is generated by network device R3 based on $update_2$; ...; and after obtaining $update_m$, network device R3 stores, in the local forwarding table, route $l$ that is generated by network device R3 based on $update_m$.

Step 72: Network device R3 respectively stores identifier set 1 and time point $t_1$, identifier set 2 and time point $t_1$, ..., identifier set $l-m+1$ and time point $t_1$, identifier set $l-m+2$ and time point $t_2$, ..., and identifier set $l$ and time point $t_m$ in a trustworthiness set in an associated manner.

Route 1 includes identifier set 1, and identifier set 1 includes route prefix 1 and neighbor identifier 1; route 2 includes identifier set 2, and identifier set 2 includes route prefix 2 and neighbor identifier 2; ...; route $l-m+1$ includes identifier set $l-m+1$, and identifier set $l-m+1$ includes route prefix $l-m+1$ and neighbor identifier $l-m+1$; route $l-m+2$ includes identifier set $l-m+2$, and identifier set $l-m+2$ includes route prefix $l-m+2$ and neighbor identifier $l-m+2$; ...; and identifier set $l$ includes route prefix $l$ and neighbor identifier $l$. The route prefix is a destination IP address in the route corresponding to the route prefix, and the neighbor identifier is a next-hop address in the route corresponding to the neighbor identifier. Network device R3 receives $update_1$ at time point $t_1$, and obtains route 1, route 2, ..., and route $l-m+1$; network device R3 receives $update_2$ at time point $t_2$, and obtains route $l-m+2$; ...; and network device R3 receives $update_m$ at time point $t_m$, and obtains route $l$. For a specific form of the trustworthiness set, refer to Table 3.

**Table 3. Trustworthiness set**

| Identifier set | | Trustworthiness level |
|---|---|---|
| Route prefix | Neighbor identifier | |
| Route prefix 1 | Neighbor identifier 1 | $t_1$ |
| Route prefix 2 | Neighbor identifier 2 | $t_1$ |
| ... | ... | ... |
| Route prefix $l-m+1$ | Neighbor identifier $l-m+1$ | $t_1$ |
| Route prefix $l-m+2$ | Neighbor identifier $l-m+2$ | $t_2$ |
| ... | ... | ... |
| Route prefix $l$ | Neighbor identifier $l$ | $t_m$ |

It should be understood that the trustworthiness set shown in Table 3 is merely an example. During actual application, the trustworthiness set may further include more information. For example, the trustworthiness level may be duration in which network device R3 obtains the route, or a trustworthiness score given by network device R3 for the route. This is not specifically limited herein.

Step 73: When network device R5 advertises a message for deleting route $i$, network device R3 deletes route $i$ stored in the forwarding table, and then stores route $l+1$ in the local forwarding table.

As described above, network device R3 receives, at time point $t_i$, update, sent by network device R5, and obtains route $i$ based on $update_i$. Route $i$ includes identifier set $i$. Identifier set $i$ may specifically include route prefix $i$ and neighbor identifier $i$. Route prefix $i$ is a destination IP address in route $i$, neighbor identifier $i$ is a next-hop address in route $i$, $1 \leq i \leq l$, and $i$ is a positive integer. In this step, network device R3 obtains $update_{m+1}$ at time point $t_{m+1}$, where $update_{m+1}$ includes route $l+1$, route $l+1$ carries identifier set $l+1$, identifier set $l+1$ includes route prefix $l+1$ and neighbor identifier $l+1$, route prefix $l+1$ is a destination IP address in route $l+1$, neighbor identifier $l+1$ is a next-hop address in route $l$+1, and $t_{m+1}>t_m$.

Specifically, when network device R5 deletes route i, network device R5 sends $\text{update}_i'$ to network device R3. $\text{update}_i'$ carries identifier set $i$, and $\text{update}_i'$ is used to notify network device R5 to delete route $i$. When network device R3 receives $\text{update}_i'$, the network device deletes, based on identifier set $i$ carried in $\text{update}_i'$, route $i$ stored in the local forwarding table. After network device R3 deletes route $i$ from the local forwarding table, network device R3 obtains $\text{update}_{m+1}$. In this case, the forwarding table of network device R3 has storage space to store route $l$+1 that is generated by the network device based on $\text{update}_{m+1}$, and identifier set $l$+1 and time point $t_{m+1}$ are stored in the trustworthiness set in an associated manner. Therefore, after network device R3 deletes route i and stores route $l$+1, the forwarding table of network device R3 still stores $l$ routes, that is, route 1, route 2, ..., route $i$-1, route $i$+1, ..., route $l$, and route $l$+1. Identifier set 1 and time point $t_1$, identifier set 2 and time point $t_1$, identifier set $l$-$m$+1 and time point $t_1$, and identifier set $l$-$m$+2 and time point $t_2$, ..., set identifier $l$ and time point $t_m$, and identifier set $l$+1 and time point $t_{m+1}$ are stored in the trustworthiness set in an associated manner.

Step 74: Network device R3 receives $\text{update}_n$ sent by network device R5.

The network device obtains $\text{update}_n$ at time point $t_n$, where $\text{update}_n$ includes route i, route i includes identifier set $i$, n is a positive integer, $n>m$+1, $t_n>t_{m+1}$ and n is a positive integer.

Step 75: Network device R3 deletes route $k$ in the local forwarding table to store route $n$, and continues to store identifier set $i$ and time point $t_i$ in the trustworthiness set.

Network device R3 receives updates at time point $t_k$, and obtains route $k$ based on $\text{update}_i$. Route $k$ includes identifier set $k$. Identifier set $k$ includes route prefix $k$ and neighbor identifier $k$. Route prefix $k$ is a destination IP address in route $k$, neighbor identifier $k$ is a next-hop address in route $k$, $i<k\le l$+1, and $k$ is a positive integer. Herein, $t_i<t_k$. Therefore, a trustworthiness level of route $k$ is lower than a trustworthiness level of route $l$. For example, route $k$ is a route corresponding to an earliest time point in the trustworthiness set.

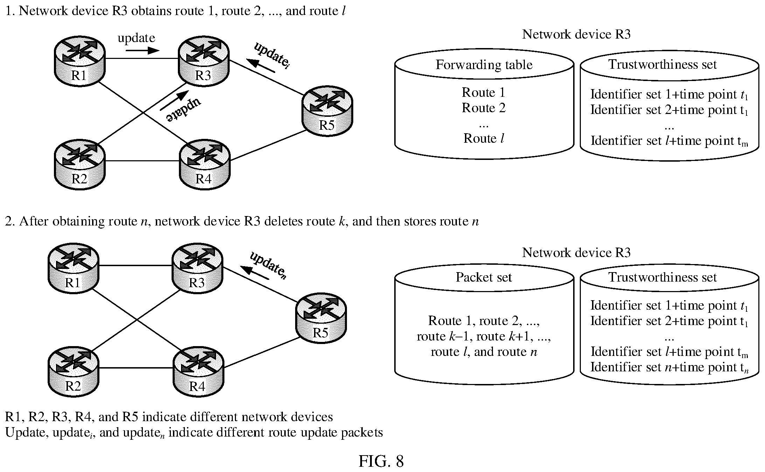

FIG. 8 shows another possible process of learning protocol packets by network device R3 under attack of massive update packets according to this application. In this solution, network device R3 considers that a protocol packet sent by network device R5 is trustworthy. Specific steps are as follows:

Step 81: Network device R1 receives, at time point $t_i$, update, sent by network device R5, stores, in a local forwarding table, route i that is generated based on $\text{update}_i$, and stores identifier set $i$ and time point $t_i$ in a trustworthiness set.

The local forwarding table of network device R3 can store a maximum of $l$ non-locally generated routes, and $l$ is a positive integer. Route i includes identifier set $i$. Identifier set $i$ may specifically include route prefix $i$ and neighbor identifier $i$. Route prefix $i$ is a destination IP address in route $i$, neighbor identifier $i$ is a next-hop address in route $i$, $1\le i\le l$, and i is a positive integer.

Step 82: After a period of time (second preset duration), network device R3 determines that route $i$ is still stored in the local forwarding table, and network device R3 determines that network device R5 is a trustworthy network device.

Step 83: Subsequently, if network device R2 suffers a route attack, network device R2 continuously sends massive update packets to network device R3, so that a quantity of routes stored in the forwarding table of network device R3 reaches $l$. In this case, the forwarding table of network device R3 stores route 1, route 2, ..., and route $l$. The trustworthiness set stores identifier set 1 and time point $t_1$, identifier set 2 and time point $t_1$, ..., identifier set $l$-$m$+1 and time point $t_1$, identifier set $l$-$m$+2 and time point $t_2$, ..., and identifier set $l$ and time point $t_m$. For definitions of route 1, route 2, ..., route $l$, identifier set 1, identifier set 2, ..., identifier set $l$, time points $t_1$, $t_2$, ..., and $t_m$, refer to step 71 and step 72.

Step 84: Network device R3 receives, at time point $t_n$, $\text{update}_n$ sent by network device R5.

Step 84: Network device R3 receives, at time point $t_n$, $\text{update}_n$ sent by network device R5.

Update$_n$ includes route n, route n includes identifier set $n$, and identifier set $n$ includes route prefix $n$ and neighbor identifier $n$. Route prefix $n$ is a destination IP address in route $n$, neighbor identifier $n$ is a next-hop address (an IP address of network device R5) in route $n$, $n>m$+1, $t_n>t_{m+1}$, and n is a positive integer.

Step 85: Network device R3 deletes route $k$ stored in the local forwarding table to store route $n$, and stores identifier set $n$ and time point $t_n$ in the trustworthiness set. For detailed descriptions of route $k$, specifically refer to step 75.

In this solution, network device R3 may consider that all protocol packets sent by network device R5 are trustworthy because network device R3 has received the protocol packet sent by network device R5, as described in the foregoing steps. Alternatively, network device R3 may be configured to consider that all protocol packets sent by network device R5 are trustworthy.

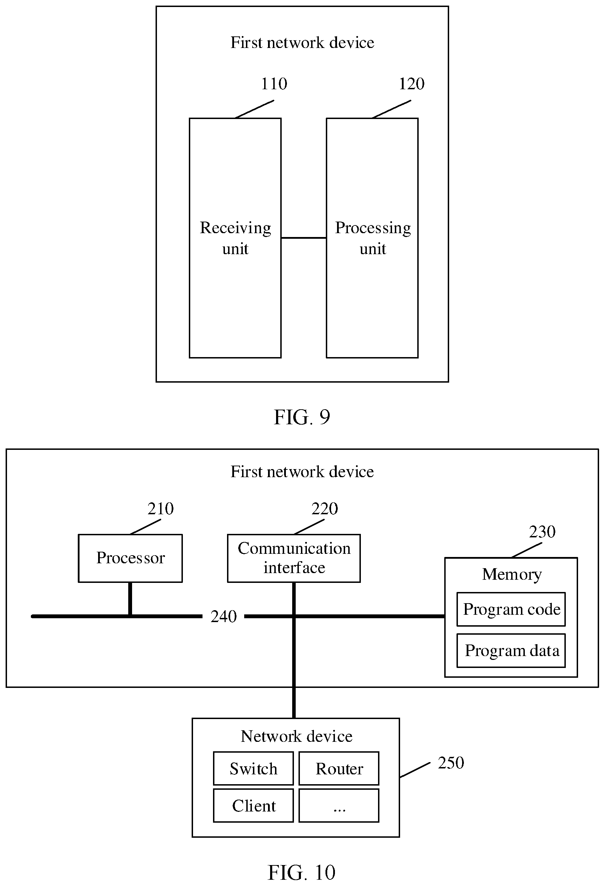

With reference to the foregoing method embodiments, the following describes related network apparatuses in embodiments of this application. FIG. 9 is a schematic diagram of a structure of a first network device according to this application. The first network device includes a receiving unit 110 and a processing unit 120.

The receiving unit 110 is configured to receive a protocol packet sent by another network device, for example, the first protocol packet sent by the second network device in S 10 1 and the second protocol packet sent by the third network device in S103.

The processing unit 120 is configured to process the received protocol packet based on a first quantity, the received protocol packet, and a trustworthiness set.

In a specific embodiment of this application, the first quantity includes a quantity of protocol packets stored in the first network device or a quantity of routes stored in the first network device.

In a specific embodiment of this application, the trustworthiness set includes at least one identifier set and at least one trustworthiness level, and the at least one identifier set one-to-one corresponds to the at least one trustworthiness level. The identifier set includes at least one identifier, and the identifier set indicates a feature of a protocol packet corresponding to the identifier set and/or a network device that generates the protocol packet corresponding to the identifier set. The trustworthiness level includes a time point at which the first network device receives the protocol packet, duration in which the first network device receives the protocol packet, or a trustworthiness score given by the first network device to the protocol packet. The trustworthiness level indicates a trustworthiness level of a corresponding protocol packet.

In a specific embodiment of this application, when the first quantity is less than a first threshold, the processing unit 120 is configured to obtain a first identifier set and a first trustworthiness level based on the first protocol packet. The processing unit 120 is further configured to store the first identifier set and the first trustworthiness level in the trustworthiness set. The first threshold includes a maximum quantity of protocol packets to be stored in the first network device or a maximum quantity of routes to be stored in the first network device. The first identifier set indicates a feature of the first protocol packet and/or a network device that generates the first protocol packet. The first trustworthiness level indicates a trustworthiness level of the first protocol packet. For details, refer to S102.

In a specific embodiment of this application, when the first quantity is greater than or equal to a first threshold, the processing unit 120 is configured to determine, based on a second identifier set and the trustworthiness set, whether the second protocol packet is trustworthy. The processing unit 120 is further configured to process the second protocol packet depending on whether the second protocol packet is trustworthy. The second identifier set indicates a feature of the second protocol packet and/or a network device that generates the second protocol packet. For details, refer to S104.

In a specific embodiment of this application, in response to a result that the second protocol packet is trustworthy, the processing unit 120 is configured to store the second protocol packet, or update a route table based on the second protocol packet. In response to a result that the second protocol packet is untrustworthy, the processing unit 120 is configured to discard the second protocol packet. The processing unit 120 is specifically configured to implement the method in S105 and S106 and step 21 to step 23.

In a specific embodiment of this application, in response to a result that the second protocol packet is trustworthy, the processing unit 120 is further configured to store the second identifier set and the trustworthiness level of the second protocol packet in the trustworthiness set. The processing unit 120 is specifically configured to implement the method in step 23.

In an example, the processing unit 120 is configured to determine, based on that the trustworthiness set includes the second identifier set, that the second protocol packet is trustworthy. The processing unit 120 is specifically configured to implement the method in the example 1.

In a specific embodiment of this application, the processing unit 120 determines, based on that the first trustworthiness level is lower than a second trustworthiness level, that the second protocol packet is trustworthy. The second trustworthiness level indicates the trustworthiness level of the second protocol packet.

In another example, if the trustworthiness set does not include the second identifier set, the processing unit 120 determines, based on a third network device that sends the second protocol packet, that the second protocol packet is trustworthy. The processing unit 120 is specifically configured to implement the method in the example 2.

In a specific embodiment of this application, before the processing unit 120 determines, based on the third network device, that the second protocol packet is trustworthy, the processing unit 120 is further configured to obtain a configuration, where the configuration indicates that a protocol packet sent by the third network device is trustworthy.

In a specific embodiment of this application, before the processing unit 120 stores the second protocol packet, the processing unit 120 is further configured to delete the first protocol packet.

The first network device in this embodiment of this application runs at least one network protocol, for example, the IS-IS protocol, the OSPF protocol, the BGP, the RIP, the LDP, or the PIM. This is not specifically limited herein. For example, when the first network device runs the IS-IS protocol, for a specific process of learning protocol packets by the first network device, refer to step 31 to step 35 and step 41 to step 44. When the first network device runs the OSPF protocol, for a specific process of learning protocol packets by the first network device, refer to step 51 to step 55 and step 61 to step 64. When the first network device runs the BGP, for a specific process of learning protocol packets by the first network device, refer to step 71 to step 75 and step 81 to step 84.

For ease of description, the foregoing embodiment does not describe the trustworthiness set and the trustworthiness level (for example, the first trustworthiness level or the second trustworthiness level) of the identifier set (for example, the first identifier set or the second identifier set). For details, refer to FIG. 2 and the embodiment thereof. Details are not described herein again.

The first network device in the foregoing embodiment stores the identifier set of the protocol packet and the trustworthiness level of the protocol packet in the trustworthiness set, so that when a memory exceeds a limit (the first quantity is greater than or equal to the first threshold) and a protocol packet is received, the first network device can determine, based on an identifier set carried in the protocol packet and the trustworthiness set, whether the protocol packet is trustworthy, to perform different processing on the protocol packet. It can be learned that under attack of massive protocol packets, the memory of the first network device does not exceed the limit, and no fault occurs when the memory exceeds the limit. In addition, the first network device can further learn a protocol packet, to reduce or avoid impact of massive attack packets on a normal service.

When the first network device in this embodiment of this application processes the protocol packet, division of the foregoing functional modules is merely an example for description. During actual application, the foregoing functions may be allocated to different functional modules for implementation according to a requirement. That is, an internal structure of the first network device is divided into different functional modules, to implement all or some of the functions described above. In addition, the first network device provided in the foregoing embodiment belongs to a same idea as the method embodiments. For a specific implementation process of the first network device, refer to the method embodiments. Details are not described herein again.

FIG. 10 is a schematic diagram of a structure of another first network device according to this application. The first network device includes a processor 210, a communication interface 220, and a memory 230. The processor 210, the communication interface 220 and the memory 230 are coupled by using a bus 240.

The processor 210 may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device (programmable logic device, PLD), a transistor logic device, a hardware component, or any combination thereof. The processor 210 may implement or execute various example methods that are described with reference to the content disclosed in this application. Specifically, the processor 210 reads program code stored in the memory 230, and cooperates with the communication interface 220 to perform some or all of S101 to S106.

The communication interface 220 may be a wired interface or a wireless interface, and is configured to communicate with another module or device. The wired interface may be an Ethernet interface, a controller area network interface, a local interconnect network (local interconnect network, LIN) interface, or a FlexRay interface. The wireless interface may be a cellular network interface, a wireless local area network interface, or the like. Specifically, the communication interface 220 may be connected to a network device 250, and the network device 250 may include a switch, a router, a client, and the like.

The memory 230 may include a volatile memory, for example, a random access memory (random access memory, RAM). The memory 230 may alternatively include a nonvolatile memory, for example, a read-only memory (read-only memory, ROM), a flash memory, a hard disk drive (hard disk drive, HDD), or a solid state drive (solid state drive, SSD). The memory 230 may further include a combination of the foregoing types of memories. The memory 230 may store program code and program data. The program code includes code of some or all units in the first network device shown in FIG. 9, for example, code of the receiving unit 110 and code of the processing unit 120. The program data is data generated in a process in which the first network device shown in FIG. 9 runs a program, for example, a trustworthiness set, a protocol packet, and a route table.

The bus 240 may be a controller area network (controller area network, CAN) bus or another internal implementation bus. The bus 240 may be classified into an address bus, a data bus, a control bus, and the like. For ease of representation, only one thick line is used to represent the bus in FIG. 10, but this does not mean that there is only one bus or only one type of bus.

The first network device in this embodiment of this application is configured to perform the method performed by the first network device in the foregoing method embodiments, and belongs to a same idea as the foregoing method embodiments. For a specific implementation process of the first network device, refer to the foregoing method embodiments. Details are not described herein again.

This application further provides a computer storage medium. The computer storage medium stores a computer program, and the computer program is executed by hardware (for example, a processor) to implement some or all of the steps in the protocol packet processing method provided in this application.

This application further provides a network system. The network system includes a first network device, and the first network device is configured to perform some or all of the steps in protocol packet processing method provided in this application.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or a wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a storage disk, or a magnetic tape), an optical medium (for example, a DVD), a semiconductor medium (for example, an SSD), or the like. In the foregoing embodiments, the description of each embodiment has respective focuses. For a part that is not described in detail in an embodiment, refer to related descriptions in other embodiments.

In the several embodiments provided in this application, it should be understood that the disclosed apparatuses may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual indirect couplings or direct couplings or communication connections may be implemented by using some interfaces. The indirect couplings or communication connections between the apparatuses or units may be implemented in electronic or other forms.

The foregoing units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium may include: any medium that can store program code, such as a USB flash drive, a removable hard disk, a read-only memory, a random access memory, a magnetic disk, or an optical disc.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A protocol packet processing method, wherein the method comprises:

   receiving, by a first network device, a first protocol packet; and
   processing, by the first network device, the first protocol packet based on a first quantity, the first protocol packet, and a trustworthiness set, wherein the first quantity comprises a quantity of protocol packets stored in the first network device or a quantity of routes stored in the first network device.

2. The method according to claim 1, wherein

   the trustworthiness set comprises at least one identifier set and at least one trustworthiness level, and the at least one identifier set one-to-one corresponds to the at least one trustworthiness level; and
   before the receiving, by a first network device, a first protocol packet, the method further comprises:

receiving, by the first network device, a second protocol packet sent by a second network device, wherein the at least one identifier set comprises a first identifier set, the at least one trustworthiness level comprises a first trustworthiness level, the first identifier set corresponds to the first trustworthiness level, the first identifier set comprises a first identifier, the first identifier set indicates a feature of a second protocol packet corresponding to the first identifier set and/or a network device that generates the second protocol packet, and the first trustworthiness level indicates a trustworthiness level of the second protocol packet corresponding to the first identifier.

3. The method according to claim 2, wherein when the first identifier indicates a route corresponding to the second protocol packet, the first identifier set further comprises a second identifier, and the second identifier indicates the network device that generates the second protocol packet.

4. The method according to claim 2, wherein when the first identifier indicates a link corresponding to the second protocol packet, the first identifier set further comprises a second identifier and a third identifier, the second identifier indicates a type of the second protocol packet, and the third identifier indicates the network device that generates the second protocol packet.

5. The method according to any one of claims 2 to 4, wherein the first trustworthiness level comprises a time point at which the first network device receives the second protocol packet, duration in which the first network device receives the second protocol packet, or a trustworthiness score given by the first network device to the second protocol packet.

6. The method according to any one of claims 2 to 5, wherein when the first quantity is greater than or equal to a first threshold, the processing, by the first network device, the first protocol packet based on a first quantity, the first protocol packet, and a trustworthiness set comprises:

obtaining, by the first network device, a second identifier set based on the first protocol packet;
determining, by the first network device based on the second identifier set and the trustworthiness set, whether the first protocol packet is trustworthy; and
performing, by the first network device, different processing on the first protocol packet based on the determining whether the first protocol packet is trustworthy.

7. The method according to claim 6, wherein the performing, by the first network device, different processing on the first protocol packet based on the determining whether the first protocol packet is trustworthy comprises:
in response to a result that the first protocol packet is trustworthy, the processing, by the first network device, the first protocol packet comprises:

storing, by the first network device, the first protocol packet; or
updating, by the first network device, a route table based on the first protocol packet; or
in response to a result that the first protocol packet is untrustworthy, the processing, by the first network device, the first protocol packet comprises:
discarding, by the first network device, the first protocol packet.

8. The method according to claim 6, wherein the determining, by the first network device based on the second identifier set and the trustworthiness set, whether the first protocol packet is trustworthy comprises:

determining, by the first network device based on that the trustworthiness set comprises the second identifier set, that the first protocol packet is trustworthy; or
if the trustworthiness set does not comprise the second identifier set, determining, by the first network device, based on a third network device that sends the first protocol packet, that the first protocol packet is trustworthy.

9. The method according to claim 8, wherein the trustworthiness set comprises a second trustworthiness level, the second identifier set corresponds to the second trustworthiness level, and the determining, by the first network device based on that the trustworthiness set comprises the second identifier set, that the first protocol packet is trustworthy comprises:
determining, by the first network device based on that the first trustworthiness level is lower than the second trustworthiness level, that the first protocol packet is trustworthy.

10. The method according to claim 8, wherein before the determining, by the first network device based on a third network device, that the first protocol packet is trustworthy, the method further comprises:
obtaining, by the first network device, a configuration, wherein the configuration indicates that a protocol packet sent by the third network device is trustworthy.

11. The method according to any one of claims 7 to 10, wherein before the storing, by the first network device, the first protocol packet, the method further comprises:
deleting, by the first network device, the second protocol packet.

12. The method according to any one of claims 1 to 5, wherein when the first quantity is less than a first threshold, the processing, by the first network device, the first protocol packet based on a first quantity, the first protocol packet, and a trustworthiness set comprises:

obtaining, by the first network device, a second identifier set and a second trustworthiness level based on the first protocol packet; and
storing, by the first network device, the second identifier set and the second trustworthiness level in the trustworthiness set.

13. A first network device, comprising a receiving unit and a processing unit, wherein

the receiving unit is configured to receive a first protocol packet; and
the processing unit is configured to process the first protocol packet based on a first quantity, the first protocol packet, and a trustworthiness set, wherein the first quantity comprises a quantity of protocol packets stored in the first network device or a quantity of routes stored in the first network device.

14. The device according to claim 13, wherein

the trustworthiness set comprises at least one identifier set and at least one trustworthiness level, and the at least one identifier set one-to-one corresponds to the at least one trustworthiness level; and
before the receiving unit receives the first protocol packet, the receiving unit is further configured to receive a second protocol packet sent by a second network device, wherein
the at least one identifier set comprises a first identifier set, the at least one trustworthiness level comprises a first trustworthiness level, the first identifier set corresponds to the first trustworthiness level, the first identifier set comprises a first identifier, the first identifier set indicates a feature of a second protocol packet corresponding to the first identifier set and/or a network device that generates the second protocol packet, and the first trustworthiness level indicates a trustworthiness level of the second protocol packet corresponding to the first identifier.

15. The device according to claim 14, wherein when the first identifier indicates a route corresponding to the second protocol packet, the first identifier set further comprises a second identifier, and the second identifier indicates the network device that generates the second protocol packet.

16. The device according to claim 14, wherein when the first identifier indicates a link corresponding to the second protocol packet, the first identifier set further comprises a second identifier and a third identifier, the second identifier indicates a type of the second protocol packet, and the third identifier indicates the network device that generates the second protocol packet.

17. The device according to any one of claims 14 to 16, wherein the first trustworthiness level comprises a time point at which the first receiving unit receives the second protocol packet, duration in which the receiving unit receives the second protocol packet, or a trustworthiness score given by the first network device to the second protocol packet.

18. The device according to any one of claims 14 to 17, wherein if the first quantity is greater than a first threshold,

the processing unit is configured to obtain a second identifier set based on the first protocol packet;
the processing unit is configured to determine, based on the second identifier set and the trustworthiness set, whether the first protocol packet is trustworthy; and
the processing unit is configured to perform different processing on the first protocol packet based on the determining whether the first protocol packet is trustworthy.

**19.** The device according to claim 17, wherein

in response to a result that the first protocol packet is trustworthy, the processing unit is configured to store the first protocol packet; or the processing unit is configured to update a route table based on the first protocol packet; or
in response to a result that the first protocol packet is untrustworthy, the processing unit is configured to discard the first protocol packet.

**20.** The device according to claim 17, wherein

the processing unit is configured to determine, based on that the trustworthiness set comprises the second identifier set, that the first protocol packet is trustworthy; or
if the trustworthiness set does not comprise the second identifier set, the processing unit is configured to determine, based on a third network device that sends the first protocol packet, that the first protocol packet is trustworthy.

**21.** The device according to claim 20, wherein the trustworthiness set comprises a second trustworthiness level, the second identifier set corresponds to the second trustworthiness level, and the processing unit is configured to determine, based on that the first trustworthiness level is lower than the second trustworthiness level, that the first protocol packet is trustworthy.

**22.** The device according to claim 20, wherein before the processing unit determines, based on the third network device, that the first protocol packet is trustworthy,
the processing unit is further configured to obtain a configuration, wherein the configuration indicates that a protocol packet sent by the third network device is trustworthy.

**23.** The device according to any one of claims 19 to 22, wherein before the first network device stores the first protocol packet, the processing unit is further configured to delete the second protocol packet.

**24.** The device according to any one of claims 12 to 15, wherein when the first quantity is less than a first threshold,

the processing unit is configured to obtain a second identifier set and a second trustworthiness level based on the first protocol packet; and
the processing unit is configured to store the second identifier set and the second trustworthiness level in the trustworthiness set.

**25.** A first network device, wherein the first network device comprises a processor and a memory, and the processor executes code in the memory to implement the method according to any one of claims 1 to 12.

**26.** A computer storage medium, storing computer instructions, wherein the computer instructions are used to implement the method according to any one of claims 1 to 12.

**27.** A network system, comprising a first network device, wherein the first network device is configured to perform the method according to any one of claims 1 to 12.

R1, R2, R3, R4, and R5 indicate different network devices

FIG. 1

| A first network device receives a first protocol packet sent by a second network device | S101 |

| When a first quantity is less than a first threshold, the first network device stores the first protocol packet and/or a first route, and stores a first identifier set and a first trustworthiness level in a trustworthiness set in association | S102 |

| The first network device receives a second protocol packet | S103 |

| When the first quantity is greater than or equal to the first threshold, the first network device determines whether the second protocol packet is trustworthy | S104 |

| In response to a result that the second protocol packet is trustworthy, the first network device stores the second protocol packet, or the first network device updates a route table based on the second protocol packet | S105 |

| In response to a result that the second protocol packet is untrustworthy, the first network device discards the second protocol packet | S106 |

FIG. 2

1. Network device R3 receives $LSP_1$, $LSP_2$, ..., and $LSP_m$

Network device R3

| LSDB | Trustworthiness set |
|------|---------------------|
| $LSP_1$ | $LSP_1$ ID+time point $t_1$ |
| $LSP_2$ | $LSP_2$ ID+time point $t_2$ |
| ... | ... |
| $LSP_m$ | $LSP_m$ ID+time point $t_m$ |

2. Network device R3 deletes $LSP_i$ sent by network device R5, and then stores $LSP_{m+1}$

Network device R3

| LSDB | Trustworthiness set |
|------|---------------------|
| | $LSP_1$ ID+time point $t_1$ |
| | $LSP_2$ ID+time point $t_2$ |
| $LSP_1$, $LSP_2$, ..., $LSP_{i-1}$ | ... |
| $LSP_{i+1}$, ..., $LSP_m$, and | $LSP_i$ ID+time point $t_i$ |
| $LSP_{m+1}$ | ... |
| | $LSP_m$ ID+time point $t_m$ |
| | $LSP_{m+1}$ ID+time point $t_{m+1}$ |

$\sim$
TO
FIG. 3B

FIG. 3A

EP 4 138 346 A1

3. After receiving $LSP_n$ sent by the network device, network device R3 deletes $LSP_k$, and then stores $LSP_n$

R1, R2, R3, R4, and R5 indicate different network devices
LSDB: Link state database
LSP: Link state protocol packet
LSP ID: Identifier of the LSP
$LSP_1$, $LSP_2$, ..., $LSP_{i-1}$, $LSP_i$, $LSP_{i+1}$, ..., $LSP_{k-1}$, $LSP_k$, $LSP_{k+1}$, $LSP_m$, $LSP_{m+1}$, $LSP_n$, and $LSP_i'$ indicate different link state protocol packets
$LSP_1$ ID, $LSP_2$ ID, ..., $LSP_i$ ID, ..., $LSP_m$ ID, and $LSP_{m+1}$ ID indicate identifiers of the different link state protocol packets

FIG. 3B

1. Network device R3 receives $LSP_1$, $LSP_2$, ..., and $LSP_m$ (where $LSP_i$ is sent by network device R5)

Network device R3

| LSDB | Trustworthiness set |
|---|---|
| $LSP_1$ | $LSP_1$ ID+time point $t_1$ |
| $LSP_2$ | $LSP_2$ ID+time point $t_2$ |
| ... | ... |
| $LSP_i$ | $LSP_i$ ID+time point $t_i$ |
| ... | ... |
| $LSP_m$ | $LSP_m$ ID+time point $t_m$ |

2. After receiving $LSP_n$ sent by network device R5, network device R3 deletes $LSP_k$, and then stores $LSP_n$

Network device R3

| LSDB | Trustworthiness set |
|---|---|
| $LSP_1$, $LSP_2$, ..., $LSP_{k-1}$, $LSP_{k+1}$, ..., $LSP_m$, and $LSP_n$ | $LSP_1$ ID+time point $t_1$<br>$LSP_2$ ID+time point $t_2$<br>...<br>$LSP_i$ ID+time point $t_i$<br>...<br>$LSP_m$ ID+time point $t_m$<br>$LSP_n$ ID+time point $t_n$ |

R1, R2, R3, R4, and R5 indicate different network devices
LSDB: Link state database
LSP: Link state protocol packet
LSP ID: Identifier of the LSP
$LSP_1$, $LSP_2$, ..., $LSP_i$, ..., $LSP_{k-1}$, $LSP_k$, $LSP_{k+1}$, $LSP_m$, and $LSP_n$ indicate different link state protocol packets
$LSP_1$ ID, $LSP_2$ ID, ..., $LSP_i$ ID, ..., $LSP_m$ ID, and $LSP_n$ ID indicate identifiers of the different link state protocol packets

FIG. 4

EP 4 138 346 A1

1. Network device R3 receives $LSA_1$, $LSA_2$, ..., and $LSA_m$

Network device R3

| LSDB | Trustworthiness set |
|---|---|
| $LSA_1$ $LSA_2$ ... $LSA_m$ | Identifier set 1+time point $t_1$ Identifier set 2+time point $t_2$ ... Identifier set $m$+time point $t_m$ |

2. Network device R3 deletes $LSA_i$ sent by network device R5, and then stores $LSA_{m+1}$

Network device R3

| LSDB | Trustworthiness set |
|---|---|
| $LSA_1$, $LSA_2$, ..., $LSA_{i-1}$ $LSA_{i+1}$, ..., $LSA_m$, and $LSA_{m+1}$ | Identifier set 1+time point $t_1$ Identifier set 2+time point $t_2$ ... Identifier set $i$+time point $t_i$ ... Identifier set $m$+time point $t_m$ Identifier set $m$+1+time point $t_{m+1}$ |

~
TO
FIG. 5B

FIG. 5A

3. After receiving $LSA_n$ sent by network device R5, network device R3 deletes $LSA_k$, and then stores $LSA_n$

Network device R3

| LSDB | Trustworthiness set |
|---|---|
| $LSA_1$, $LSA_2$, ..., $LSA_{i-1}$, $LSA_{i+1}$, ..., $LSA_{k-1}$, $LSA_k+1$, ..., $LSA_m$, $LSA_{m+1}$, and $LSA_n$ | Identifier set 1+time point $t_1$<br>Identifier set 2+time point $t_2$<br>...<br>Identifier set $i$+time point $t_i$<br>...<br>Identifier set $m$+time point $t_m$<br>Identifier set $m+1$+time point $t_{m+1}$ |

R1, R2, R3, R4, and R5 indicate different network devices
LSDB: Link state database
LSA: Link state advertisement
$LSA_1$, $LSA_2$, ..., $LSA_{i-1}$, $LSA_i$, $LSA_{i+1}$, ..., $LSA_{k-1}$, $LSA_k$, $LSA_{k+1}$, ..., $LSA_m$, $LSA_{m+1}$, $LSA_n$, and $LSA_i'$ indicate different link state advertisements

FIG. 5B

1. Network device R3 receives $LSA_1$, $LSA_2$, ..., and $LSA_m$ (where $LSA_i$ is sent by network device R5)

Network device R3

| LSDB | Trustworthiness set |
|---|---|
| $LSA_1$ | Identifier set 1+time point $t_1$ |
| $LSA_2$ | Identifier set 2+time point $t_2$ |
| ... | ... |
| $LSA_i$ | Identifier set $i$+time point $t_i$ |
| ... | ... |
| $LSA_m$ | Identifier set $m$+time point $t_m$ |

2. After receiving $LSA_n$ sent by network device R5, network device R3 deletes $LSA_k$, and then stores $LSA_n$

Network device R3

| LSDB | Trustworthiness set |
|---|---|
| $LSA_1$, $LSA_2$,..., $LSA_{k-1}$, $LSA_{k+1}$, ..., $LSA_m$, and $LSA_n$ | Identifier set 1+time point $t_1$ <br> Identifier set 2+time point $t_2$ <br> ... <br> Identifier set $i$+time point $t_i$ <br> ... <br> Identifier set $m$+time point $t_m$ <br> Identifier set $n$+time point $t_n$ |

R1, R2, R3, R4, and R5 indicate different network devices
LSDB: Link state database
LSA: Link state advertisement
$LSA_1$, $LSA_2$, ..., $LSA_i$, ..., $LSA_{k-1}$, $LSA_k$, $LSA_{k+1}$, ϵ , $LSA_m$, and $LSA_n$ indicate different link state advertisements

FIG. 6

1. Network device R3 obtains route 1, route 2, ..., and route $l$

update

update$_i$

update

Network device R3

| Forwarding table | Trustworthiness set |
| --- | --- |
| Route 1 | Identifier set 1+time point $t_1$ |
| Route 2 | Identifier set 2+time point $t_1$ |
| ... | ... |
| Route $l$ | Identifier set $l$+time point $t_m$ |

2. Network device R3 deletes route $i$ sent by network device R5, and then stores route $l$+1

update$_i'$

update$_{m+1}$

Network device R3

| Forwarding table | Trustworthiness set |
| --- | --- |
| Route 1, route 2, ..., route $i$-1, route $i$+1, ..., route $l$, and route $l$+1 | Identifier set 1+time point $t_1$ <br> Identifier set 2+time point $t_2$ <br> ... <br> Identifier set $i$+time point $t_i$ <br> ... <br> Identifier set $m$+time point $t_m$ <br> Identifier set $m$+1+time point $t_{m+1}$ |

~
TO
FIG. 7B

FIG. 7A

3. After receiving route $n$ sent by network device R5, network device R3 deletes route $k$, and then stores route $n$

Network device R3

| Forwarding table |
|---|
| Route 1, route 2, ...,<br>route i–1, route i+1, ...,<br>route k–1, route k+1, ...,<br>route l, route l+1, and route n |

| Trustworthiness set |
|---|
| Identifier set 1+time point $t_1$<br>Identifier set 2+time point $t_2$<br>...<br>Identifier set $i$+time point $t_i$<br>...<br>Identifier set $m$+time point $t_m$<br>Identifier set $m$+1+time point $t_{m+1}$ |

R1, R2, R3, R4, and R5 indicate different network devices
Update, update$_i$, update$_n$, update$_{m+1}$, and update$_i'$ indicate different route update packets

FIG. 7B

EP 4 138 346 A1

1. Network device R3 obtains route 1, route 2, ..., and route $l$

Network device R3

| Forwarding table | Trustworthiness set |
| --- | --- |
| Route 1<br>Route 2<br>...<br>Route $l$ | Identifier set 1+time point $t_1$<br>Identifier set 2+time point $t_1$<br>...<br>Identifier set $l$+time point $t_m$ |

2. After obtaining route $n$, network device R3 deletes route $k$, and then stores route $n$

Network device R3

| Packet set | Trustworthiness set |
| --- | --- |
| Route 1, route 2, ...,<br>route $k-1$, route $k+1$, ...,<br>route $l$, and route $n$ | Identifier set 1+time point $t_1$<br>Identifier set 2+time point $t_1$<br>...<br>Identifier set $l$+time point $t_m$<br>Identifier set $n$+time point $t_n$ |

R1, R2, R3, R4, and R5 indicate different network devices
Update, update$_i$, and update$_n$ indicate different route update packets

FIG. 8

First network device

110                    120

Receiving
unit

Processing
unit

FIG. 9

First network device

210                    220

Processor

Communication
interface

230

Memory

Program code

Program data

240

Network device

Switch    Router

250

Client      ...

FIG. 10

## INTERNATIONAL SEARCH REPORT

International application No.

**PCT/CN2021/082831**

| A. | CLASSIFICATION OF SUBJECT MATTER |
|---|---|

H04L 12/703(2013.01)i; H04L 12/721(2013.01)i; H04L 29/06(2006.01)i

According to International Patent Classification (IPC) or to both national classification and IPC

| B. | FIELDS SEARCHED |
|---|---|

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 协议, 路由, 报文, 攻击, 阈值, 门限, 上限, 限制, 可信度, 可信评分, 信誉, 优先级, 标识, 白名单, protocol, routing, message?, attack+, threshold, trusted, credible, reliability, credibility, priority, ID?, white, list+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 104113548 A (HANGZHOU H3C TECHNOLOGIES CO., LTD.) 22 October 2014 (2014-10-22) description, paragraphs [0020]-[0076] | 1-27 |
| A | CN 104702560 A (HUAWEI TECHNOLOGIES CO., LTD.) 10 June 2015 (2015-06-10) entire document | 1-27 |
| A | CN 107395632 A (BEIJING NSFOCUS INFORMATION TECHNOLOGY CO., LTD. et al.) 24 November 2017 (2017-11-24) entire document | 1-27 |
| A | CN 110324295 A (ALIBABA GROUP HOLDING LIMITED) 11 October 2019 (2019-10-11) entire document | 1-27 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 May 2021** | **23 June 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/082831**

| Patent document cited in search report | | | Publication date (day/month/year) | Patent family member(s) | | | Publication date (day/month/year) |
|---|---|---|---|---|---|---|---|
| CN | 104113548 | A | 22 October 2014 | CN | 104113548 | B | 09 January 2018 |
| CN | 104702560 | A | 10 June 2015 | None | | | |
| CN | 107395632 | A | 24 November 2017 | CN | 107395632 | B | 22 September 2020 |
| CN | 110324295 | A | 11 October 2019 | HK | 40014970 | A0 | 28 August 2020 |

Form PCT/ISA/210 (patent family annex) (January 2015)

**EP 4 138 346 A1**

REFERENCES CITED IN THE DESCRIPTION

**Patent documents cited in the description**

- CN 202010404456X